(19) Europäisches Patentamt
European Patent Office
Office européen des brevets

(11) EP 3 614 604 A1

(12) EUROPEAN PATENT APPLICATION
published in accordance with Art. 153(4) EPC

(43) Date of publication:
26.02.2020 Bulletin 2020/09

(51) Int Cl.:
*H04L 5/00* (2006.01)

(21) Application number: 18793818.8

(22) Date of filing: 04.05.2018

(86) International application number:
PCT/CN2018/085526

(87) International publication number:
WO 2018/202108 (08.11.2018 Gazette 2018/45)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.05.2017 CN 201710313986

(71) Applicant: Huawei Technologies Co., Ltd.
Longgang District
Shenzhen, Guangdong 518129 (CN)

(72) Inventors:
• ZHANG, Leiming
  Shenzhen
  Guangdong 518129 (CN)
• LIU, Jianghua
  Shenzhen
  Guangdong 518129 (CN)

(74) Representative: Maiwald Patent- und
Rechtsanwaltsgesellschaft mbH
Elisenhof
Elisenstraße 3
80335 München (DE)

(54) **METHOD AND DEVICE FOR DATA TRANSMISSION**

(57) This application provides a data transmission method and a device. The method includes: determining to-be-sent B CBs; mapping the B CBs to REs of a scheduling resource, to obtain mapped data, where the scheduling resource includes L OFDM symbols, L1 of the L OFDM symbols meet one of a first condition, a second condition, or a third condition, and at least one of the L1 OFDM symbols has at least two groups of adjacent first elements, where a quantity of elements of another CB between adjacent first elements in one group is the same as that of the other group, and the first elements are elements in one partial CB; and sending the mapped data to a terminal device. When a channel of a part of frequency bandwidth is in a deep fading state, for a same CB, a quantity of elements affected by deep fading is significantly reduced, and impact of deep fading on CB decoding performance is reduced, thereby ensuring stability of communications system performance.

An access network device determines to-be-sent B code blocks CBs, where each of at least B–1 CBs includes D elements, B is an integer greater than 1, and D is an integer greater than or equal to 4 — S101

The access network device maps the B CBs to REs of a scheduling resource, to obtain mapped data, where the scheduling resource includes L OFDM symbols, and L is an integer greater than or equal to 2 — S102

The access network device sends the mapped data to a terminal device — S103

FIG. 3

EP 3 614 604 A1

## Description

This application claims priority to Chinese Patent Application No. 201710313986.1, filed with the Chinese Patent Office on May 5, 2017 and entitled "DATA TRANSMISSION METHOD AND DEVICE", which is incorporated herein by reference in its entirety.

## TECHNICAL FIELD

This application relates to communications technologies, and in particular, to a data transmission method and a device.

## BACKGROUND

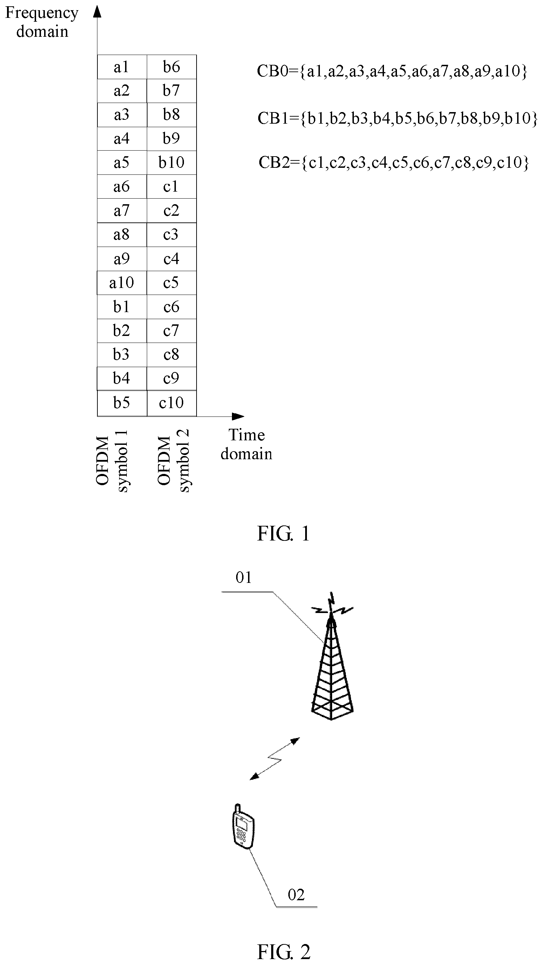

For data transmission between a base station and a terminal device in a long term evolution (Long Term Evolution, LTE for short) system, data generally exists in a form of a transport block (Transmission Block, TB for short). In actual transmission, a TB is usually divided into a plurality of code blocks (Code block, CB for short), and the plurality of CBs obtained through division are carried on corresponding time-frequency resources for transmission. However, due to a limitation of frequency domain bandwidth, one code block (Code block, CB for short) may occupy a plurality of orthogonal frequency division multiplexing (Orthogonal Frequency Division Multiplexing, OFDM for short) symbols in time domain, where the OFDM symbols are time domain resources, as shown in FIG. 1. In FIG. 1, CB1 occupies an OFDM symbol 1 and an OFDM symbol 2. It should be noted herein that, all of the CBs obtained by dividing the foregoing TB have a same data volume. Alternatively, some of the CBs have a same data volume, and in remaining CBs other than these CBs, one CB may have a data volume smaller than that of any other CB. It should be noted that, a data volume of each CB is a sum of data volumes of all elements in the CB. An element in a CB may be one data block, or one data symbol, or several consecutive data symbols, or one data bit, or several consecutive data bits.

In the foregoing LTE system, there is the following possibility: When a channel corresponding to a part of frequency bandwidth on a frequency domain resource is in a deep fading state, prior-art distribution of all elements in a CB over frequencies leads to deep fading of some or all elements in the CB. For example, reference may be made to CB0 shown in FIG. 1. Assuming that a channel corresponding to a segment of frequency bandwidth mapped to CB0 in frequency domain is in the deep fading state, all elements in CB0, that is, {a1,a2,a3,a4,a5,a6,a7,a8,a9,a10}, encounter deep fading. In this case, decoding of CB0 by the base station or the terminal is severely affected and even fails, deteriorating system performance.

Therefore, how to reduce impact caused by deep fading of a channel to decoding of a CB becomes an urgent technical problem to be resolved currently.

## SUMMARY

This application provides a data transmission method and a device, to resolve the following technical problem: When a channel corresponding to a part of frequency bandwidth on a frequency domain resource is in a deep fading state, prior-art distribution of all elements in a CB over frequencies leads to impact of deep fading on CB decoding performed by a base station or a terminal device, and consequently, system performance deteriorates.

According to a first aspect, this application provides a data transmission method, including:

determining, by an access network device, to-be-sent B code blocks CBs, where each of at least B-1 CBs includes D elements, B is an integer greater than 1, and D is an integer greater than or equal to 4; mapping, by the access network device, the B CBs to resource elements REs of a scheduling resource, to obtain mapped data, where the scheduling resource includes L OFDM symbols, and L is an integer greater than or equal to 2; where L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D; and

sending, by the access network device, the mapped data to a terminal device.

In a possible design, each of L-L1 OFDM symbols includes elements of at least one complete CB and includes no element of a partial CB.

In a possible design, each of the B CBs is a data block corresponding to each data layer.

With reference to the data transmission method provided in the first aspect and the possible designs, the access network device maps the determined B CBs to the REs of the scheduling resource, to obtain the mapped data. When the mapped data corresponds to the L1 OFDM symbols on the scheduling resource, because CBs on the L1 OFDM symbols meet at least one of the first condition, the second condition, and the third condition, to be specific, the CBs on the L1 OFDM symbols are distributed across OFDM symbols, in this scenario, after the B CBs are mapped to the scheduling resource in this application, at least one of the L1 OFDM symbols has at least two groups of adjacent first elements, where a quantity of elements of another CB between adjacent first elements in one group is the same as that of the other group. In this way, elements on one OFDM symbol can be distributed on all frequency domain resources of the OFDM symbol at even or approximately even intervals (that is, evenly distributed on different subcarriers of the OFDM symbol), thereby greatly increasing a frequency domain diversity gain. In addition, when a channel corresponding to a part of frequency bandwidth is in a deep fading state, for a same CB, a quantity of elements affected by deep fading is significantly reduced, and impact of deep fading on CB decoding performance is reduced, thereby ensuring stability of communications system performance.

In a possible design, all elements of the CB whose quantity of elements is D and to which the partial CB belongs are distributed on different subcarriers of two OFDM symbols.

According to the data transmission method provided in this possible design, elements of a CB distributed across OFDM symbols are distributed on different subcarriers of two OFDM symbols at even or approximately even intervals, so that a relatively large frequency domain diversity gain can be obtained and system transmission performance can be improved.

In a possible design, if the L1 OFDM symbols meet the first condition or the second condition, the mapping, by the access network device, the B CBs to resource elements REs of a scheduling resource, to obtain mapped data specifically includes:

determining, by the access network device, a sequence of each OFDM symbol on the scheduling resource, where a sequence of each of the L1 OFDM symbols includes second elements, first elements, and an element in a null state on the OFDM symbol, and the second elements are elements in one complete CB on the OFDM symbol; and
mapping, by the access network device, the sequence of each OFDM symbol on the scheduling resource to the REs of the scheduling resource, to obtain mapped data.

In a possible design, if the L1 OFDM symbols meet the third condition, the mapping, by the access network device, the B CBs to resource elements REs of a scheduling resource, to obtain mapped data specifically includes:

determining, by the access network device, a sequence of each OFDM symbol on the scheduling resource, where a sequence of each of the L1 OFDM symbols includes first elements corresponding to the two partial CBs and an element in a null state on the OFDM symbol; and
mapping, by the access network device, the sequence corresponding to each OFDM symbol on the scheduling resource to the REs of the scheduling resource, to obtain mapped data.

In a possible design, the determining, by the access network device, a sequence of each OFDM symbol on the scheduling resource specifically includes:

writing, by the access network device for each of the L1 OFDM symbols, elements of all CBs on the OFDM symbol by row of a block interleaver, and performing output by column of the block interleaver, to obtain the sequence of each of the L1 OFDM symbols, where
the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs included on the OFDM symbol; and
in the block interleaver, elements in a row in which the partial CB is located include first elements of the partial CB and an element in the null state, where a quantity of the elements in the null state is D-D1, D1 is a quantity of the first elements in the partial CB, and D1 is an integer greater than or equal to 3.

In a possible design, in the block interleaver, a location of the element in the null state in the elements in the row in which the partial CB is located is at least one of the following locations:
the element in the null state is located before the 1st first element of the partial CB;
the element in the null state is located after the last first element of the partial CB; or
some of the elements in the null state are located between two adjacent first elements of the partial CB.

In a possible design, the mapping, by the access network device, the sequence of each OFDM symbol on the scheduling resource to the REs of the scheduling resource, to obtain mapped data specifically includes:
mapping, by the access network device, each element in the sequence of each OFDM symbol on the scheduling resource to frequency domain based on a frequency order or a subcarrier sequence number order of the OFDM symbol, and when an element in the sequence is in the null state, ignoring the element and mapping a next element in the sequence, to obtain mapped data.

In a possible design, the L1 OFDM symbols include a first OFDM symbol and a second OFDM symbol adjacent to the first OFDM symbol, the first OFDM symbol includes a first partial CB of a CB whose quantity of elements is D, and the second OFDM symbol includes a remaining second partial CB of the CB whose quantity of elements is D; and
in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB; or

if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

In a possible design, if first elements of the partial CB on one of the L1 OFDM symbols include the 1st element of a CB whose quantity of elements is D, in the block interleaver, an element in the null state in a row in which the partial CB on the OFDM symbol is located exists after the last first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists before the 1st first element of the partial CB.

In a possible design, if first elements of the partial CB on one of the L1 OFDM symbols include the 1st element of a CB whose quantity of elements is D, in the block interleaver, an element in the null state in a row in which the partial CB on the OFDM symbol is located exists before the 1st first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists after the last first element of the partial CB.

According to the method provided in the foregoing possible designs, the access network device supplements the element in the null state to the partial CB, so that when writing the CBs on the L1 OFDM symbols to the block interleaver and performing output by column, the access network device can stagger elements of one CB on the OFDM symbol. In this way, during resource mapping, elements of a plurality of CBs on one OFDM symbol can be evenly or approximately evenly distributed in frequency domain. In addition, a CB distributed across OFDM symbols has different subcarrier locations on two different OFDM symbols. Therefore, when a channel corresponding to a part of frequency bandwidth is in the deep fading state, for the CB distributed across OFDM symbols, a quantity of elements affected by deep fading is significantly reduced, and impact of deep fading on CB decoding performance is reduced, thereby ensuring stability of communications system performance.

In a possible design, in the block interleaver, in a row in which the partial CB on one of the L1 OFDM symbols is located, the partial CB has at least two groups of two adjacent first elements, where a quantity of elements in the null state between two adjacent first elements in one group is the same as that of the other group.

In a possible design, in the block interleaver, in the row in which the partial CB on one of the L1 OFDM symbols is located, the partial CB has at least two groups of two adjacent first elements between which there are P elements in the null state, where

$$P = \text{floor}((D - D1)/(D1 - 1)),$$

where floor is an operation of rounding down to a nearest integer, Q remaining elements in the null state are located before the 1st first element of the partial CB or located after the last first element of the partial CB, and Q = (D - D1) - (D1 - 1) * P.

According to the method provided in the foregoing possible designs, the access network device supplements the element in the null state to the partial CB, so that when writing the CBs on the L1 OFDM symbols to the block interleaver and performing output by column, for a CB distributed across a plurality of OFDM symbols, the access network device can use interleaving by using the block interleaver or resource mapping to evenly or approximately evenly distribute, to resource locations mapped to each OFDM symbol, elements of the CB distributed across a plurality of OFDM symbols, that is, the elements of the CB distributed across a plurality of OFDM symbols are enabled to locate in different frequency domain resource locations mapped to each OFDM symbol, to obtain a relatively large frequency domain diversity gain. In addition, when a channel of a part of frequency bandwidth is in deep fading, for the CB distributed across OFDM symbols, a quantity of elements affected by deep fading is significantly reduced, and impact of deep fading on CB decoding performance is reduced, thereby ensuring stability of communications system performance.

In a possible design, the writing, for each of the L1 OFDM symbols, elements of all CBs on the OFDM symbol by row of a block interleaver, and performing output by column of the block interleaver, to obtain the sequence corresponding to each of the L1 OFDM symbols specifically includes:

determining, by the access network device based on a quantity of CBs on each of the L1 OFDM symbols and a preset CB sorting order, a CB writing order of writing the CBs on each OFDM symbol to the block interleaver; and

writing the elements of all the CBs on each of the OFDM symbols by row of the block interleaver based on the CB writing order corresponding to each OFDM symbol, and performing output by column of the block interleaver, to obtain the sequence corresponding to each of the L1 OFDM symbols.

In a possible design, the L1 OFDM symbols include a first OFDM symbol and a second OFDM symbol adjacent to the first OFDM symbol, and the determining, by the access network device based on a quantity of CBs on each of the L1 OFDM symbols and a preset CB sorting order, a CB writing order of writing the CBs on each OFDM symbol to the block interleaver specifically includes:

if a CB writing order of the first OFDM symbol is a first CB sorting order, a CB writing order of the second OFDM symbol is a reversed order of the first CB sorting order; or

if a CB writing order of the first OFDM symbol is a reversed order of the first CB sorting order, a CB writing order of the second OFDM symbol is the first CB sorting order.

According to the method provided in the foregoing possible designs, when the access network device maps elements of CBs on the first OFDM symbol and the second OFDM symbol to the scheduling resource, the CB writing orders of the first OFDM symbol and the second OFDM symbol are set to be mutually reversed orders of each other, so that frequency domain locations in which elements of CBs on the first OFDM symbol are mapped to REs are mutually staggered with frequency domain locations in which elements of CBs on the second OFDM symbol are mapped to REs, and the frequency domain locations are distributed on all frequency domain resources at even or approximately even intervals, to obtain a relatively large frequency domain diversity gain. In addition, when a channel corresponding to a part of frequency bandwidth is in the deep fading state, for the CB distributed across OFDM symbols, a quantity of elements affected by deep fading is significantly reduced, and impact of deep fading on CB decoding performance is reduced, thereby ensuring stability of communications system performance.

According to a second aspect, this application provides a data transmission method, including:

receiving, by a terminal device, mapped data sent by an access network device, where the mapped data is obtained by the access network device by mapping determined to-be-sent B CBs to REs of a scheduling resource, where

each of at least B-1 CBs includes D elements, B is an integer greater than 1, and D is an integer greater than or equal to 4; and

the scheduling resource includes L OFDM symbols, and L is an integer greater than or equal to 2; and L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs;

the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D; and

performing, by the terminal device, a subsequent operation on the mapped data.

In a possible design, each of L-L1 OFDM symbols includes elements of at least one complete CB and includes no element of a partial CB.

In a possible design, all elements of the CB whose quantity of elements is D and to which the partial CB belongs are distributed on different subcarriers of two OFDM symbols.

In a possible design, each of the B CBs is a data block corresponding to each data layer.

In a possible design, if the L1 OFDM symbols meet the first condition or the second condition, the mapped data received by the terminal device is specifically: mapped data that is obtained by the access network device by determining a sequence of each OFDM symbol on the scheduling resource by using the B CBs, and mapping the sequence corresponding to each OFDM symbol on the scheduling resource to the REs of the scheduling resource, where a sequence of each of the L1 OFDM symbols includes second elements, first elements, and an element in a null state on the OFDM symbol, and the second elements are elements in one complete CB on the OFDM symbol.

In a possible design, if the L1 OFDM symbols meet the third condition, the mapped data received by the terminal device is specifically: mapped data that is obtained by the access network device by determining a sequence of each OFDM symbol on the scheduling resource by using the B CBs, and mapping the sequence corresponding to each OFDM symbol on the scheduling resource to the REs of the scheduling resource, where a sequence of each of the L1 OFDM symbols includes first elements corresponding to the two partial CBs and an element in a null state.

In a possible design, for each of the L1 OFDM symbols, the foregoing sequence is obtained by the access network device by writing elements of all CBs on the OFDM symbol by row of a block interleaver, and performing output by column of the block interleaver, where the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs included on the OFDM symbol; and in the block interleaver, elements in a row in which the partial CB is located include first elements of the partial CB and an element in the null state, where a quantity of the elements in the null state is D-D1, D1 is a quantity of the first elements in the partial CB, and D1 is an integer greater than or equal to 3.

In a possible design, in the block interleaver, a location of the element in the null state in the elements in the row in which the partial CB is located is at least one of the following locations:

the element in the null state is located before the 1st first element of the partial CB;
the element in the null state is located after the last first element of the partial CB; or
some of the elements in the null state are located between two adjacent first elements of the partial CB.

In a possible design, the foregoing mapped data may be specifically obtained by the access network device by mapping each element in the sequence of each OFDM symbol on the scheduling resource to frequency domain based on a frequency order or a subcarrier sequence number order of the OFDM symbol, and when an element in the sequence is in the null state, ignoring the element and mapping a next element in the sequence.

In a possible design, the L1 OFDM symbols include a first OFDM symbol and a second OFDM symbol adjacent to the first OFDM symbol, the first OFDM symbol includes a first partial CB of a CB whose quantity of elements is D, and the second OFDM symbol includes a remaining second partial CB of the CB whose quantity of elements is D; and

in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB; or

if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

In a possible design, if first elements of the partial CB on one of the L1 OFDM symbols include the 1st element of a CB whose quantity of elements is D, in the block interleaver, an element in the null state in a row in which the partial CB on the OFDM symbol is located exists after the last first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists before the 1st first element of the partial CB.

In a possible design, if first elements of the partial CB on one of the L1 OFDM symbols include the 1st element of a CB whose quantity of elements is D, in the block interleaver, an element in the null state in a row in which the partial CB on the OFDM symbol is located exists before the 1st first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists after the last first element of the partial CB.

In a possible design, in the block interleaver, in a row in which the partial CB on one of the L1 OFDM symbols is located, the partial CB has at least two groups of two adjacent first elements, where a quantity of elements in the null state between two adjacent first elements in one group is the same as that of the other group.

In a possible design, in the block interleaver, in the row in which the partial CB on one of the L1 OFDM symbols is located, the partial CB has at least two groups of two adjacent first elements between which there are P elements in the null state, where

$$P = \text{floor}((D - D1)/(D1 - 1)),$$

where floor is an operation of rounding down to a nearest integer, Q remaining elements in the null state are located before the 1st first element of the partial CB or located after the last first element of the partial CB, and Q = (D - D1) - (D1 - 1) * P.

In a possible design, the foregoing sequence is obtained by the access network device by determining, based on a quantity of CBs on each of the L1 OFDM symbols and a preset CB sorting order, a CB writing order of writing the CBs on each OFDM symbol to the block interleaver; and writing the elements of all the CBs on each of the OFDM symbols by row of the block interleaver based on the CB writing order corresponding to each OFDM symbol, and performing output by column of the block interleaver.

In a possible design, the L1 OFDM symbols include a first OFDM symbol and a second OFDM symbol adjacent to the first OFDM symbol; and if a CB writing order of the first OFDM symbol is a first CB sorting order, a CB writing order of the second OFDM symbol is a reversed order of the first CB sorting order; or

if a CB writing order of the first OFDM symbol is a reversed order of the first CB sorting order, a CB writing order of the second OFDM symbol is the first CB sorting order.

For beneficial effects of the data transmission method provided in the second aspect and the possible designs of the second aspect, refer to the beneficial effects brought by the first aspect and the possible designs of the first aspect. Details are not described herein.

According to a third aspect, this application provides a data transmission method, including:

determining, by an access network device, to-be-sent B code blocks CBs, where each of at least B-1 CBs includes K elements, and K is an integer greater than or equal to 4;

writing, by the access network device, elements of the B CBs to a block interleaver by column, and performing row permutation on the block interleaver;

outputting, by the access network device by column, elements that are of the CBs in the block interleaver and that are obtained after the row permutation, and mapping each column of elements that are output by column, to resource elements REs of each OFDM symbol on a scheduling resource, to obtain mapped data; and

sending, by the access network device, the mapped data to a terminal device, where

the scheduling resource includes L OFDM symbols, each OFDM symbol has K REs, the block interleaver has K rows and L columns, and L is an integer greater than or equal to 2.

In a possible design, the mapping each column of elements that are output by column, to resource elements REs of each OFDM symbol on a scheduling resource, to obtain mapped data specifically includes: mapping, by the access network device, each column of elements that are output by column, to frequency domain based on a frequency order or a subcarrier sequence number order of an OFDM symbol corresponding to each column of elements, to obtain mapped data.

In a possible design, the performing row permutation on the block interleaver includes at least the following:

permuting the second row of data in the block interleaver other than the first row of data in the block interleaver to the $(K+1)^{th}$ row.

According to the method provided in the third aspect and the possible designs of the third aspect, the access network device writes the elements of the determined B CBs to the block interleaver by column, and performs row permutation on the block interleaver to which the elements of the CBs are written; outputs, by column, elements that are of the CBs in the block interleaver and that are obtained after the row permutation, and further maps each column of elements that are output by column, to REs of each OFDM symbol on a scheduling resource, to obtain mapped data; and sends the mapped data to a terminal device. In this method, one OFDM symbol corresponds to one column of CB elements. In the CB elements, elements belonging to one CB are staggered. In this way, during resource mapping, the foregoing interleaving operation of the block interleaver enables elements of a plurality of CBs on one OFDM symbol to be evenly or approximately evenly distributed in frequency domain, or enables elements of a CB distributed across a plurality of OFDM symbols to be evenly or approximately evenly distributed in resource locations mapped to all the OFDM symbols, to obtain a relatively large frequency domain diversity gain. In addition, when a channel corresponding to a part of frequency bandwidth is in a deep fading state, a quantity of elements affected by deep fading is significantly reduced, and impact of deep fading on CB decoding performance is reduced, thereby ensuring stability of communications system performance.

According to a fourth aspect, this application provides a data transmission method, including:

receiving, by a terminal device, mapped data sent by an access network device, where the mapped data is obtained by the access network device by writing determined to-be-sent B CBs to a block interleaver by column, and performing row permutation on the block interleaver; and outputting, by column, elements that are of the CBs in the block interleaver and that are obtained after the row permutation, and mapping each column of elements that are output by column, to REs of each OFDM symbol on a scheduling resource, where

each of at least B-1 CBs includes K elements, and K is an integer greater than or equal to 4; and the scheduling resource includes L OFDM symbols, each OFDM symbol has K REs, the block interleaver has K rows and L columns, and L is an integer greater than or equal to 2; and

performing, by the terminal device, a subsequent operation on the mapped data.

In a possible design, the mapped data received by the terminal device is specifically obtained by the access network device by mapping each column of elements that are output by column, to frequency domain based on a frequency order or a subcarrier sequence number order of an OFDM symbol corresponding to each column of elements.

In a possible design, the performing row permutation on the block interleaver includes at least the following: permuting the second row of data in the block interleaver other than the first row of data in the block interleaver to the $(K+1)^{th}$ row.

For beneficial effects of the data transmission method provided in the fourth aspect and the possible designs of the fourth aspect, refer to the beneficial effects brought by the second aspect and the possible designs of the second aspect. Details are not described herein.

According to a fifth aspect, an embodiment of this application provides an access network device, to implement the data transmission method in the first aspect. The device has a function of implementing the foregoing data transmission method. The function may be implemented by hardware, or may be implemented by hardware executing corresponding software. The hardware or software includes one or more modules corresponding to the foregoing function.

In a possible implementation of the fifth aspect, the access network device includes a plurality of functional modules or units, configured to implement any data transmission method in the first aspect.

In another possible implementation of the fifth aspect, a structure of the access network device may include a processor and a transceiver. The processor is configured to support the device in executing a corresponding function in any data transmission method in the first aspect. The transceiver is configured to support the access network device in communicating with another network device or a terminal device, for example, may be a corresponding radio frequency module or baseband module. The access network device may further include a memory. The memory is configured to couple to the processor, and the memory stores a program instruction and data that are necessary for the access network to execute the foregoing information processing method.

According to a sixth aspect, an embodiment of this application provides a terminal device, to implement the data transmission method in the second aspect. The device has a function of implementing the foregoing data transmission method. The function may be implemented by hardware, or may be implemented by hardware executing corresponding software. The hardware or software includes one or more modules corresponding to the foregoing function.

In a possible implementation of the sixth aspect, the terminal device includes a plurality of functional modules or units, configured to implement any data transmission method in the first aspect.

In another possible implementation of the sixth aspect, a structure of the terminal device may include a processor and a transceiver. The processor is configured to support the device in executing a corresponding function in any data transmission method in the second aspect. The transceiver is configured to support the terminal device in communicating with another network device or a terminal device, for example, may be a corresponding radio frequency module or baseband module. The terminal device may further include a memory. The memory is configured to couple to the processor, and the memory stores a program instruction and data that are necessary for the access network to execute the foregoing information processing method.

According to a seventh aspect, an embodiment of this application provides an access network device, to implement the data transmission method in the third aspect. The device has a function of implementing the foregoing data transmission method. The function may be implemented by hardware, or may be implemented by hardware executing corresponding software. The hardware or software includes one or more modules corresponding to the foregoing function.

In a possible implementation of the seventh aspect, the access network device includes a plurality of functional modules or units, configured to implement any data transmission method in the third aspect.

In another possible implementation of the seventh aspect, a structure of the access network device may include a processor and a transceiver. The processor is configured to support the device in executing a corresponding function in any data transmission method in the third aspect. The transceiver is configured to support the access network device in communicating with another network device or a terminal device, for example, may be a corresponding radio frequency module or baseband module. The access network device may further include a memory. The memory is configured to couple to the processor, and the memory stores a program instruction and data that are necessary for the access network to execute the foregoing information processing method.

According to an eighth aspect, an embodiment of this application provides a terminal device, to implement the data transmission method in the fourth aspect. The device has a function of implementing the foregoing data transmission method. The function may be implemented by hardware, or may be implemented by hardware executing corresponding software. The hardware or software includes one or more modules corresponding to the foregoing function.

In a possible implementation of the eighth aspect, the terminal device includes a plurality of functional modules or units, configured to implement any data transmission method in the first aspect.

In another possible implementation of the eighth aspect, a structure of the terminal device may include a processor and a transceiver. The processor is configured to support the device in executing a corresponding function in any data transmission method in the fourth aspect. The transceiver is configured to support the terminal device in communicating with another network device or a terminal device, for example, may be a corresponding radio frequency module or baseband module. The terminal device may further include a memory. The memory is configured to couple to the processor, and the memory stores a program instruction and data that are necessary for the access network to execute the foregoing information processing method.

According to a ninth aspect, an embodiment of this application provides a computer storage medium, configured to store a computer software instruction used by the foregoing access network device. The computer storage medium includes a program designed for executing the first aspect.

According to a tenth aspect, an embodiment of this application provides a computer storage medium, configured to store a computer software instruction used by the foregoing terminal device. The computer storage medium includes a program designed for executing the second aspect.

According to an eleventh aspect, an embodiment of this application provides a computer storage medium, configured to store a computer software instruction used by the foregoing access network device. The computer storage medium includes a program designed for executing the third aspect.

According to a twelfth aspect, an embodiment of this application provides a computer storage medium, configured to store a computer software instruction used by the foregoing terminal device. The computer storage medium includes a program designed for executing the fourth aspect.

According to a thirteenth aspect, an embodiment of this application provides a computer program product including an instruction. When the computer program is executed by a computer, the instruction enables the computer to execute a function executed by the access network device in the foregoing method.

According to a fourteenth aspect, an embodiment of this application provides a computer program product including an instruction. When the computer program is executed by a computer, the instruction enables the computer to execute a function executed by the terminal device in the foregoing method.

Compared with the prior art, according to the data transmission method and the device provided in this application, the access network device maps the determined B CBs to the REs of the scheduling resource, to obtain the mapped data. When the mapped data corresponds to the L1 OFDM symbols on the scheduling resource, because the CBs on the L1 OFDM symbols meet at least one of the first condition, the second condition, and the third condition, to be specific, the CBs on the L1 OFDM symbols are distributed across OFDM symbols, in this scenario, after the B CBs are mapped to the scheduling resource in this application, at least one of the L1 OFDM symbols has at least two groups of adjacent first elements, where a quantity of elements of another CB between adjacent first elements in one group is the same as that of the other group. In this way, elements on one OFDM symbol can be distributed on all frequency domain resources of the OFDM symbol at even or approximately even intervals (that is, evenly distributed on different subcarriers of the OFDM symbol), thereby greatly increasing a frequency domain diversity gain. In addition, when a channel corresponding to a part of frequency bandwidth is in the deep fading state, for a same CB, a quantity of elements affected by deep fading is significantly reduced, and impact of deep fading on CB decoding performance is reduced, thereby ensuring stability of communications system performance.

**BRIEF DESCRIPTION OF DRAWINGS**

FIG. 1 is a schematic diagram of distribution of elements of a code block on an OFDM symbol according to this application;
FIG. 2 is an architectural diagram of a communications system according to this application;
FIG. 3 is a schematic flowchart of Embodiment 1 of a data transmission method according to this application;
FIG. 4 is Schematic Diagram 1 of distribution of elements of CBs on two OFDM symbols according to this application;
FIG. 5 is Schematic Diagram 2 of distribution of elements of CBs on two OFDM symbols according to this application;
FIG. 6 is Schematic Diagram 3 of distribution of elements of CBs on two OFDM symbols according to this application;
FIG. 7 is a schematic flowchart of Embodiment 2 of a data transmission method according to this application;
FIG. 8 is a schematic flowchart of Embodiment 3 of a data transmission method according to this application;
FIG. 9 is Schematic Diagram 1 of a location of an element in a null state in a block interleaver according to this application;
FIG. 10 is Schematic Diagram 2 of a location of an element in a null state in a block interleaver according to this application;
FIG. 11 is Schematic Diagram 3 of a location of an element in a null state in a block interleaver according to this application;
FIG. 12 is Schematic Diagram 4 of a location of an element in a null state in a block interleaver according to this application;
FIG. 13 is Schematic Diagram 5 of a location of an element in a null state in a block interleaver according to this application;
FIG. 14 is a schematic flowchart of Embodiment 4 of a data transmission method according to this application;
FIG. 15 is a schematic flowchart of Embodiment 5 of a data transmission method according to this application;
FIG. 16 is a schematic structural diagram of Embodiment 1 of an access network device according to this application;
FIG. 17 is a schematic structural diagram of Embodiment 2 of an access network device according to this application;
FIG. 18 is a schematic structural diagram of Embodiment 3 of an access network device according to this application;
FIG. 19 is a schematic structural diagram of Embodiment 4 of an access network device according to this application;
FIG. 20 is a schematic structural diagram of Embodiment 5 of an access network device according to this application;
FIG. 20a is a schematic flowchart of another embodiment of a data transmission method according to this application;
FIG. 20b is a schematic flowchart of another embodiment of a data transmission method according to

FIG. 21 is a schematic flowchart of another embodiment of a data transmission method according to this application;
FIG. 21a is a schematic flowchart of another embodiment of a data transmission method according to this application;
FIG. 22a is a schematic structural diagram of Embodiment 1 of a terminal device according to this application;
FIG. 22b is a schematic structural diagram of Embodiment 2 of a terminal device according to this application;
FIG. 22c is a schematic structural diagram of Embodiment 3 of a terminal device according to this application;
FIG. 22d is a schematic structural diagram of Embodiment 4 of a terminal device according to this application;
FIG. 22e is a schematic structural diagram of Embodiment 5 of a terminal device according to this application; and
FIG. 22f is a schematic structural diagram of Embodiment 6 of a terminal device according to this application.

## DESCRIPTION OF EMBODIMENTS

A data transmission method and a device provided in this application are applicable to an architectural diagram of a system shown in FIG. 2. As shown in FIG. 2, the system includes an access network device 01 and a terminal device 02.

The access network device 01 may be a base transceiver station (Base Transceiver Station, BTS for short) in global system for mobile communications (Global System of Mobile communication, GSM for short) or code division multiple access (Code Division Multiple Access, CDMA for short), or a NodeB (NodeB, NB for short) in wideband code division multiple access (Wideband Code Division Multiple Access, WCDMA for short), or an evolved NodeB (Evolutional NodeB, eNB or eNodeB for short) in LTE, or a relay node or an access point, or a base station in a future 5G network, or a user terminal in a D2D scenario, or the like. This is not limited herein.

The terminal device 02 may be a wireless terminal or a wired terminal. The wireless terminal may be a device that provides a user with voice and/or other service data connectivity, a handheld device with a radio connection function, or another processing device connected to a wireless modem. The wireless terminal may communicate with one or more core networks through a radio access network (Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, the wireless terminal may be a device such as a personal communications service (Personal Communication Service, PCS for short) phone, a cordless telephone set, a session initiation protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile (Mobile) console, a remote station (Remote Station), a remote terminal (Remote Terminal), an access terminal (Access Terminal), a user terminal (User Terminal), a user agent (User Agent), or a user device (User Device or User Equipment). This is not limited herein.

In the prior art, due to limited frequency domain bandwidth, one code block (Code block, CB for short) may occupy a plurality of orthogonal frequency division multiplexing (Orthogonal Frequency Division Multiplexing, OFDM for short) symbols in time domain. Referring to FIG. 1, when a channel corresponding to a part of frequency bandwidth on a frequency domain resource is in a deep fading state, prior-art distribution of all elements in a CB over frequencies leads to deep fading of some or all elements in the CB (for example, CB0 in FIG. 1). Assuming that a channel corresponding to a segment of frequency bandwidth mapped to CB0 in frequency domain is in the deep fading state, all elements in CB0 are in the deep fading state. In this case, decoding of CB0 by a base station or a terminal is severely affected and even fails, deteriorating system performance.

Therefore, the data transmission method and the device provided in this application are intended to resolve the following technical problem: When a channel of a part of frequency bandwidth on a frequency domain resource is in the deep fading state, prior-art distribution of all elements in a CB over frequencies leads to impact of deep fading on CB decoding performed by a base station or a terminal device, and consequently, system performance deteriorates.

The following uses specific embodiments to describe in detail technical solutions of this application and how the technical solutions of this application resolve the foregoing technical problem. The following several specific embodiments may be combined with each other, and a same or similar concept or process may not be described repeatedly in some embodiments. The following describes the embodiments of this application with reference to accompanying drawings.

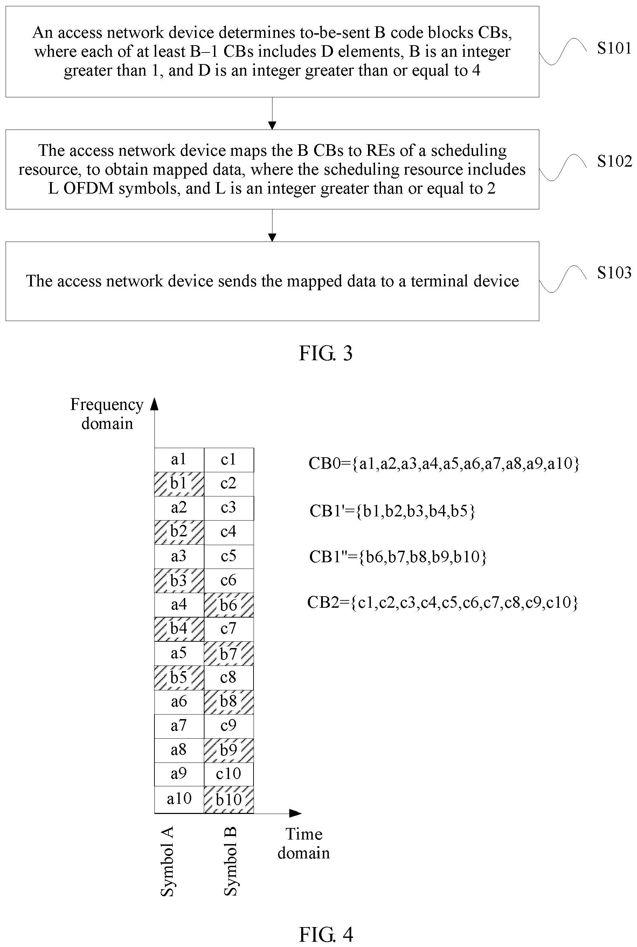

FIG. 3 is a schematic flowchart of Embodiment 1 of a data transmission method according to this application. This embodiment relates to a specific process in which an access network device evenly maps a CB distributed across OFDM symbols to resource elements (Resource Element, RE for short), so that elements of the CB distributed across OFDM symbols can be evenly or approximately evenly distributed in frequency domain, to obtain a frequency domain diversity gain. The "CB distributed across OFDM symbols" herein means that one partial CB of a CB whose quantity of elements is D is located on one OFDM symbol, and the other partial CB of the CB whose quantity of elements is D is located on another OFDM symbol. An element in a CB may be one data block, or one data symbol, or several consecutive data symbols, or one data bit, or several consecutive data bits.

As shown in FIG. 3, the method includes the following steps.

S101: An access network device determines to-be-sent B CBs, where each of at least B-1 CBs includes D elements, B is an integer greater than 1, and D is an integer greater than or equal to 4.

Specifically, in data transmission between the access network device and a terminal device, data exists in a form of a transport block (Transmission Block, TB for short). In actual data transmission, the access network device needs to determine the to-be-sent B CBs, to send data to the terminal device in a form of a CB. Therefore, when determining the to-be-sent B CBs, the access network device may divide the TB to obtain the foregoing B CBs. All of the CBs obtained through division have a same data volume. Alternatively, some of the CBs have a same data volume, and in remaining CBs other than these CBs, one CB may have a data volume smaller than that of any other CB. This is not limited in this embodiment. Optionally, the data volume may be a quantity of elements, a quantity of symbols, or a quantity of bits. This is not limited herein. Optionally, when the access network device determines the B CBs, the access network device may alternatively divide the TB to obtain a plurality of primary CBs, and map, based on a quantity of layers of spatial transmission, the plurality of primary CBs obtained through division to each data layer. Each data layer may include a sub CB of each primary CB (the sub CB is a part of the primary CB). The CBs in this application indicate sub CBs or data blocks corresponding to each data layer. In the foregoing B CBs, each of the at least B-1 CBs includes D elements, and D is an integer greater than or equal to 4.

In other words, the CBs in this application may be the CBs obtained by the access network device by dividing the TB, or may be data blocks corresponding to each data layer (layer) of spatial transmission after the access network device maps the primary CBs obtained by dividing the TB to the data layer. For example, with respect to spatial transmission with a rank equal to 2, that is, a quantity of data layers of spatial transmission is 2, for one TB, each primary CB obtained by dividing the TB is separately mapped to the two layers. Each layer includes one sub CB of each primary CB obtained by dividing the TB. The CBs in this application are actually sub CBs corresponding to this layer, that is, data blocks corresponding to this layer. Certainly, with respect to spatial transmission with a rank equal to 1, the access network device maps the CBs obtained by dividing the TB to only one layer. To be specific, in the spatial transmission with the rank equal to 1, data blocks corresponding to one layer are actually the CBs obtained by dividing the TB. In this scenario, the CBs in this application indicate the data blocks corresponding to the data layer of the spatial transmission with the rank of 1, and are actually the CBs obtained by dividing the TB.

S102: The access network device maps the B CBs to REs of a scheduling resource, to obtain mapped data, where the scheduling resource includes L OFDM symbols, and L is an integer greater than or equal to 2.

L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; and the third condition is that one OFDM symbol includes elements of two partial CBs. In addition to the first condition, the second condition, or the third condition, at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D.

Specifically, after the access network device determines the B CBs, the access network device maps elements of the B CBs to the REs of the scheduling resource, to obtain mapped data. The scheduling resource includes L OFDM symbols, and L is an integer greater than or equal to 2. It should be noted that, REs on some of the L OFDM symbols may be occupied by another reference signal or control channel, while REs on the other OFDM symbols may be unoccupied. The access network device may correspondingly map the elements of the B CBs to the unoccupied REs. It should be understood that, this embodiment is not strictly limited to mapping to unoccupied REs. In a subsequent communications system, there may be flexible mapping. To be specific, when a CB is mapped to occupied REs according to a specific rule, a contention-based manner or a priority sorting-based manner may be used to determine whether to forcibly occupy content in the REs, and place other content occupying the REs, for example, a reference signal, data, or signaling, to another resource. Occupying an RE herein may actually be that the network device determines, according to a specific rule, to send a signal, data, or signaling on the RE.

After the mapping of the B CBs is completed, that L1 of the L OFDM symbols meet at least one of a first condition, a second condition, or a third condition is specifically as follows:

The first condition is that one of the L1 OFDM symbols (assuming that the OFDM symbol is a symbol A) includes elements of one partial CB and elements of at least one complete CB. The complete CB herein means that D elements of the CB are all located on the symbol A. The partial CB is a part of a CB whose quantity of elements is D, to be specific, first elements included in the partial CB are some elements in the CB whose quantity of elements is D.

The second condition is that one OFDM symbol (assuming that the OFDM symbol is a symbol A) includes elements of at least one complete CB and elements of two other partial CBs. The complete CB herein has a same meaning as the complete CB in the first condition. It is assumed that the foregoing two other partial CBs are denoted as CB0' and CB2'. CB0' is a part of CB0 whose quantity of elements is D, and CB2' is a part of CB2 whose quantity of elements is D. To be specific, the CBs whose quantity of elements is D and to which the two partial CBs respectively belong are different. An element in each of the partial CBs is a first element.

The third condition is that one OFDM symbol includes elements of two partial CBs. The partial CB herein has a same meaning as the partial CB described in the second condition. CBs whose quantity of elements is D and to which the two partial CBs belong are different. An element in each of the partial CBs is a first element.

In any of the first condition, the second condition, and the third condition, a CB (a CB in the foregoing B-1 CBs) whose quantity of elements is D and that is distributed across OFDM symbols exists in each of the L1 OFDM symbols. In other words, elements of the CB whose quantity of elements is D are distributed not only on one OFDM symbol. In addition, after the resource mapping, at least one of the L1 OFDM symbols has at least two groups of adjacent first elements, where a quantity of elements of another CB between adjacent first elements in one group is the same as that of the other group. The "two groups of adjacent first elements" indicate elements belonging to a same partial CB. The "elements of another CB" may include second elements of a complete CB on the OFDM symbol, and may further include first elements of a partial CB on the OFDM symbol other than the partial CB in which the current first elements are located. This is not limited in this embodiment.

For better understanding of this solution, the following describes element distribution in each of the foregoing three conditions by using an example in which L1 = 2, that is, the scheduling resource includes two OFDM symbols. For clear description, it is assumed that the two OFDM symbols are a symbol A and a symbol B, and it is assumed that none of REs on the two OFDM symbols is occupied. In addition, it is assumed that D is equal to 10, that is, each of the at least B-1 CBs includes 10 elements, and the elements may be one or more symbols or one or more bits.

For the first condition, it is assumed that there are 15 REs on each of the two OFDM symbols. In this case, the symbol A includes a complete CB (assumed to be CB0) and one partial CB. The partial CB is a part of CB1, the partial CB includes five first elements {b1,b2,b3,b4,b5}, and the partial CB is denoted as CB1'. The symbol B includes the other part {b6,b7,b8,b9,b10} (denoted as CB1") of CB1 and one complete CB (assumed to be CB2). In the first condition, for the symbol A, mapped locations of the CB on the symbol A are shown in FIG. 4. In FIG. 4, a quantity of elements of CB0 between adjacent first elements in each group is the same as that of any other group. For the symbol B, mapped locations of the CB on the symbol B are also shown in FIG. 4. In FIG. 4, a quantity of elements of CB2 between adjacent first elements in each group is the same as that of any other group. With reference to FIG. 4, elements of all CBs on one OFDM symbol are distributed on frequency domain resources on the OFDM symbol at even or approximately even intervals. In this way, when a channel of a part of frequency bandwidth is in deep fading, for a same CB, a quantity of elements affected by deep fading is significantly reduced, and impact of deep fading on CB decoding performance is reduced, thereby ensuring stability of communications system performance.

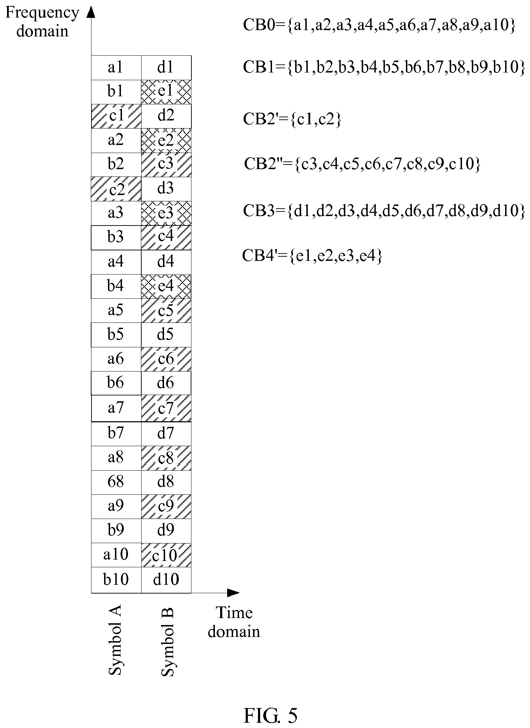

For the second condition, it is assumed that there are 22 REs on each of the two OFDM symbols. In this case, the symbol A includes two complete CBs (assumed to be CB0 and CB1) and one partial CB. The partial CB is a part of CB2, the partial CB includes two first elements {c1,c2}, and the partial CB is denoted as CB2'. The symbol B includes the other part {c3,c4,c5,c6,c7,c8,c9,c10} (denoted as CB2") of CB2, one complete CB (assumed to be CB3), and another partial CB. The partial CB is a part of CB4, and the partial CB includes four first elements {e1,e2,e3,e4} (denoted as CB4'). It should be noted that, the other partial CB of CB4 is located on another OFDM symbol adjacent to the symbol B, and details are not described herein again. The symbol A meets the first condition. Locations mapped to the CBs on the symbol A are shown in FIG. 5. The symbol B meets the second condition. Mapped locations of the CBs on the symbol B are also shown in FIG. 5. In FIG. 5, a quantity of second elements (elements of CB3) between e2 and e3 is the same as that between e3 and e4. In addition, a quantity of elements of CB2" between e2 and e3 is also the same as that between e3 and e4. Quantities of second elements between c3 and c4, c4 and c5, c5 and c6, c6 and c7, c7 and c8, c8 and c9, and c9 and c10 are all the same. With reference to FIG. 5, elements of all CBs on one OFDM symbol are also distributed on frequency domain resources on the OFDM symbol at even or approximately even intervals. In this way, when a channel of a part of frequency bandwidth is in deep fading, for a same CB, a quantity of elements affected by deep fading is significantly reduced, and impact of deep fading on CB decoding performance is reduced, thereby ensuring stability of communications system performance.

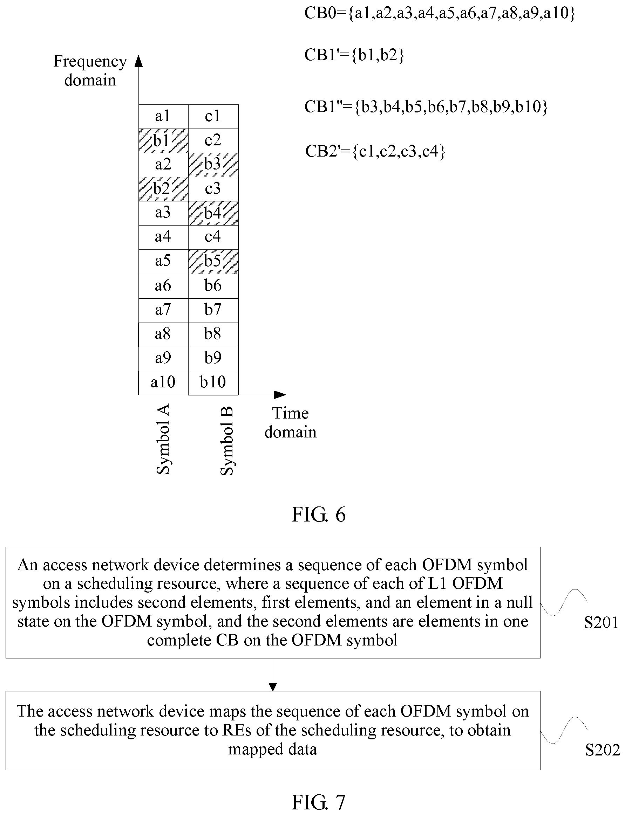

For the third condition, it is assumed that there are 12 REs on each of the two OFDM symbols. In this case, the symbol A includes a complete CB (assumed to be CB0) and one partial CB. The partial CB is a part of CB1, the partial CB includes two first elements {b1,b2}, and the partial CB is denoted as CB1'. The symbol B includes the other part {b3,b4,b5,b6,b7,b8,b9,b10} (denoted as CB1") of CB1 and another partial CB. The partial CB is a part of CB2, and the partial CB includes four first elements {c1,c2,c3,c4} (denoted as CB2'). The symbol A meets the first condition. Locations mapped to the CBs on the symbol A are shown in FIG. 6. The symbol B meets the third condition. Mapped locations of the CBs on the symbol B are also shown in FIG. 6. In FIG. 6, a quantity of elements of CB2' between b3 and b4 is the same as that between b4 and b5, and a quantity of elements of CB1" between c2 and c3 is also the same as that between c3 and c4. With reference to FIG. 6, elements of all CBs on one OFDM symbol are distributed on frequency domain resources on the OFDM symbol at even or approximately even intervals. In this way, when a channel of a part of frequency bandwidth is in deep fading, for a same CB, a quantity of elements affected by deep fading is significantly reduced, and impact of deep fading on CB decoding performance is reduced, thereby ensuring stability of communications system performance.

It can be learned from the description of the foregoing examples that, in the foregoing L1 OFDM symbols, elements of all CBs on one OFDM symbol are distributed at intervals or distributed through interleaving based on first elements of a partial CB on the OFDM symbol. In this way, the elements on one OFDM symbol can be evenly or approximately evenly distributed on all frequency domain resources of the OFDM symbol (that is, evenly distributed on different subcarriers of the OFDM symbol), thereby greatly increasing a frequency domain diversity gain. In addition, when a channel corresponding to a part of frequency bandwidth is in a deep fading state, for a same CB, a quantity of elements affected by deep fading is significantly reduced, and impact of deep fading on CB decoding performance is reduced, thereby ensuring stability of communications system performance.

There are a plurality of implementations in which the access network device determines the to-be-sent B CBs in S101 and the access network device maps the B CBs to the REs of the scheduling resource, to obtain the mapped data in S102. For example, a determining process of S101 may be as follows: Signaling sent by another network element is received in an initialization phase, where the signaling instructs to send data by using B CBs; and the access network device determines the to-be-sent B CBs based on the signaling, or directly determines, according to a predefined protocol or an agreed rule, to send data by using B CBs, and further determines the to-be-sent B CBs, or determines the B CBs based on different data types, or directly determines the to-be-sent B CBs. The data herein may be to-be-transmitted content or a to-be-transmitted bitstream. The mapping in S102 may also be a determining process. After the access network device determines the to-be-sent CBs in S101, the access network device may directly map the to-be-sent CBs, or store the to-be-sent CBs in a memory or a chip, and then determine REs in which each of the CBs is located. This mapping process may alternatively be determining of an order. To be specific, corresponding REs are retrieved from the memory or the chip before they are sent, and the following step S103 is directly executed.

S103. The access network device sends the mapped data to a terminal device.

Optionally, each of L-L1 OFDM symbols includes elements of at least one complete CB and includes no element of a partial CB.

According to the data transmission method provided in this application, the access network device maps the determined B CBs to the REs of the scheduling resource, to obtain the mapped data. When the mapped data corresponds to the L1 OFDM symbols on the scheduling resource, because CBs on the L1 OFDM symbols meet at least one of the first condition, the second condition, and the third condition, to be specific, the CBs on the L1 OFDM symbols are distributed across OFDM symbols, in this scenario, after the B CBs are mapped to the scheduling resource in this application, at least one of the L1 OFDM symbols has at least two groups of adjacent first elements, where a quantity of elements of another CB between adjacent first elements in one group is the same as that of the other group. In this way, elements on one OFDM symbol can be distributed on all frequency domain resources of the OFDM symbol at even or approximately even intervals (that is, evenly distributed on different subcarriers of the OFDM symbol), thereby greatly increasing a frequency domain diversity gain. In addition, when a channel corresponding to a part of frequency bandwidth is in the deep fading state, for a same CB, a quantity of elements affected by deep fading is significantly reduced, and impact of deep fading on CB decoding performance is reduced, thereby ensuring stability of communications system performance.

Optionally, all elements of the CB whose quantity of elements is D and to which the partial CB belongs are distributed on different subcarriers of two OFDM symbols. For clearer description of this solution, FIG. 4 to FIG. 6 are still used as an example.

For FIG. 4, CB1' on the symbol A and CB1" on the symbol B both belong to CB1. First elements {b1,b2,b3,b4,b5} of CB1' on the symbol A are distributed in subcarrier locations on the symbol A that are different from those on the symbol B in which first elements {b6,b7,b8,b9,b10} of CB1" on the symbol B are distributed. It can be seen from the entire FIG. 4 that, the elements of CB1 are distributed across two OFDM symbols, and the elements of CB1 and the elements of CB0 and CB2 are distributed on all frequency domain resources at even intervals. In this way, a relatively large frequency domain diversity gain can be obtained, and system transmission performance can be improved.

For FIG. 5, CB2' on the symbol A and CB2" on the symbol B both belong to CB2. First elements {c1,c2} of CB2' on the symbol A are distributed in subcarrier locations on the symbol A that are different from those on the symbol B in which first elements {c3,c4,c5,c6,c7,c8,c9,c10} of CB2" on the symbol B are distributed. It can be seen from the entire FIG. 5 that, the elements of CB2 are distributed across two OFDM symbols, and the elements of CB2 and the elements of CB0, CB1, CB3, and CB4' are distributed on all frequency domain resources at even intervals. In this way, a relatively large frequency domain diversity gain can be obtained, and system transmission performance can be improved.

For FIG. 6, CB1' on the symbol A and CB1" on the symbol B both belong to CB1. First elements {b1,b2} of CB1' on the symbol A are distributed in subcarrier locations on the symbol A that are different from those on the symbol B in which first elements {b3,b4,b5,b6,b7,b8,b9,b10} of CB1" on the symbol B are distributed. It can be seen from the entire FIG. 6 that, the elements of CB1 are distributed across two OFDM symbols, and the elements of CB1 and the elements of CB0 and CB2' are distributed on all frequency domain resources at even intervals. In this way, a relatively large frequency domain diversity gain can be obtained, and system transmission performance can be improved.

The following uses different embodiments to describe a specific process in which the access network device maps the B CBs to the REs of the scheduling resource, to obtain the mapped data. Refer to the following embodiments.

FIG. 7 is a schematic flowchart of Embodiment 2 of a data transmission method according to this application. This embodiment relates to a specific process in which the access network device maps the B CBs to the REs of the scheduling resource. Based on Embodiment 1, further, S102 may specifically include the following steps.

S201: The access network device determines a sequence of each OFDM symbol on the scheduling resource, where a sequence of each of the L1 OFDM symbols includes second elements, first elements, and an element in a null state on the OFDM symbol, and the second elements are elements in one complete CB on the OFDM symbol.

Specifically, during data transmission, the access network device pre-determines a quantity of CBs on each OFDM symbol, that is, determines how many CBs can be accommodated by one OFDM symbol. The CBs herein include a CB whose quantity of elements is D, and also include a CB whose quantity of elements is less than D. For example, it is assumed that the access network device determines that one OFDM symbol can accommodate 1.5 CBs. In this case, the access network device may determine, based on a preset CB order (assuming that the CB order is obtained by sorting sequence numbers in ascending order, for example, CB0, CB1, CB3...), CBs on the first OFDM symbol are one CB whose quantity of elements is D (namely, CB1) and one partial CB whose quantity of elements is D/2 (namely, 0.5 CB2), CBs on the second OFDM symbol are remaining 0.5 CB2 and CB3, and by analogy. Certainly, the preset CB order is merely an example, and this embodiment sets no limitation on the preset CB order. In addition, when the 1.5 CBs or 0.5 CBs cannot be exactly divided, for example, when one CB has an odd quantity of elements, rounding up or rounding down to a nearest integer may be performed for determining. A specific calculation manner may be pre-defined.

After the access network device determines the quantity of CBs on each OFDM symbol, the access network device supplements an element in the null state to a partial CB on each OFDM symbol, so that a total quantity of elements of the partial CB is D after the element in the null state is supplemented. For example, the element in the null state may be NA or NULL. In this way, a partial CB on one OFDM symbol includes first elements and a supplementary element. A quantity of elements in the null state is equal to a difference obtained by deducting the first elements of the partial CB from D. For a complete CB on one OFDM symbol, elements of the complete CB are second elements.

Optionally, regardless of that the L1 OFDM symbols meet the first condition or the second condition, or meet the third condition, when the access network device supplements an element in the null state to a partial CB on any of the L1 OFDM symbols, three supplement manners may be specifically included:

First supplement manner: Optionally, the access network device supplements the element in the null state after the last first element of the partial CB on the OFDM symbol.

Second supplement manner: Optionally, the access network device supplements the element in the null state before the 1st first element of the partial CB on the OFDM symbol.

Third supplement manner: Optionally, the access network device supplements some of the elements in the null state between every two adjacent first elements of the partial CB on the OFDM symbol.

After the access network device supplements elements in the null state to partial CBs on the L1 OFDM symbols, the sequence corresponding to each of the L1 OFDM symbols may be obtained by using a preset interleaving operation. This application sets no limitation on the preset interleaving operation, provided that after the sequence obtained by using the preset interleaving operation is mapped to the scheduling resource, at least one of the L1 OFDM symbols has at least two groups of adjacent first elements, where a quantity of elements of another CB between adjacent first elements in one group is the same as that of the other group.

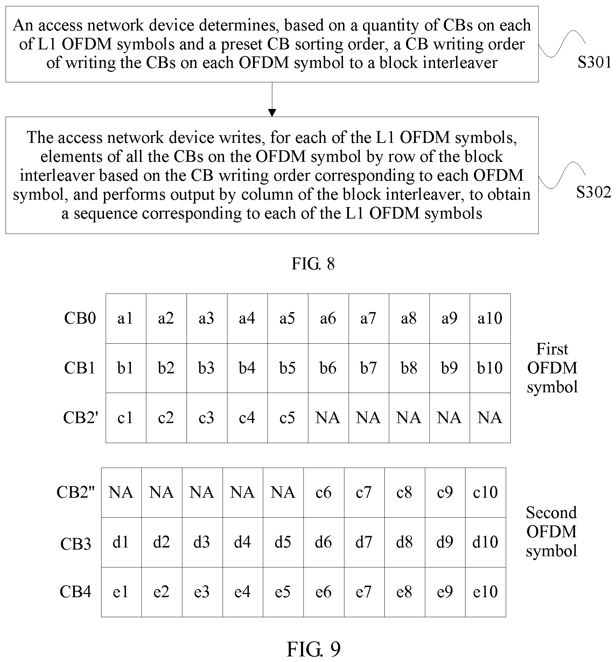

Optionally, the access network device may further obtain the sequence of each OFDM symbol by using a block interleaver. A specific process of determining the sequence is shown in FIG. 8.

It should be noted that, if the L1 OFDM symbols meet the first condition or the second condition, the sequence of each of the L1 OFDM symbols may include the second elements of the complete CB, the first elements of the partial CB, and the supplemented element in the null state that are on the OFDM symbol. In other words, elements in a sequence of one OFDM symbol include elements of all CBs on the OFDM symbol. For an OFDM symbol in the L OFDM symbols other than the L1 OFDM symbols, a sequence of each OFDM symbol includes second elements of a complete CB on the OFDM symbol.

After the access network device supplements the elements in the null state to the partial CBs on the L1 OFDM symbols, if the L1 OFDM symbols meet the third condition, the sequence of each of the L1 OFDM symbols may include first elements corresponding to the two partial CBs and an element in the null state that are on the OFDM symbol.

S202: The access network device maps the sequence of each OFDM symbol on the scheduling resource to the REs of the scheduling resource, to obtain mapped data.

Specifically, after determining the sequence of each OFDM symbol, the access network device maps the sequence of each OFDM symbol to the REs of the scheduling resource. Optionally, during mapping, the access network device maps each element in the sequence of each OFDM symbol on the scheduling resource to frequency domain based on a frequency order or a subcarrier sequence number order of the OFDM symbol. One element of a CB is mapped to one RE. When an element in the sequence of the OFDM symbol is in the null state, the element in the null state is ignored, and a next element in the sequence is directly mapped, to obtain mapped data.

Optionally, as an implementation of determining the sequence of each OFDM symbol, a specific process in which the access network device determines the sequence of each OFDM symbol in S201 is shown in FIG. 8. The method includes the following steps.

S301: The access network device determines, based on a quantity of CBs on each of the L1 OFDM symbols and a preset CB sorting order, a CB writing order of writing the CBs on each OFDM symbol to the block interleaver.

Specifically, after the access network device determines the quantity of CBs that can be accommodated by each OFDM symbol on the scheduling resource, the access network device may determine, based on the preset CB sorting order, the CB writing order of writing the CBs on each OFDM symbol to the block interleaver. For example, the CB writing order may be the same as the preset CB sorting order, or be opposite to the preset CB sorting order. Optionally, the access network device may further determine, based on the preset CB sorting order, identifiers of the CBs accommodated by each OFDM symbol, that is, determine which CBs can be accommodated by each OFDM symbol. Then, the access network device may determine, based on the CB identifiers, the CB writing order of writing the CBs on each of the L1 OFDM symbols to the block interleaver. In this embodiment, the block interleaver has M rows and D (same as the quantity of elements in a complete CB on one OFDM symbol) columns, M is the quantity of CBs on one of the L1 OFDM symbols, and the quantity of CBs on one OFDM symbol is equal to a total quantity of all CBs included on the OFDM symbol. The "total quantity of all CBs" herein is equal to a sum of a quantity of complete CBs on the OFDM symbol and a quantity of partial CBs on the OFDM symbol.

S302: The access network device writes, for each of the L1 OFDM symbols, elements of all CBs on each of the OFDM symbols by row of the block interleaver based on the CB writing order corresponding to each OFDM symbol, and performs output by column of the block interleaver, to obtain the sequence corresponding to each of the L1 OFDM symbols.

Specifically, after the access network device determines the CB writing order of each of the L1 OFDM symbols, the access network device writes the elements of the CBs on each OFDM symbol by row of the block interleaver, and inserts an element in the null state into each row in which a partial CB is located. An insertion location of the element in the null state in the row in which each partial CB is located may be inserted based on any of the foregoing three supplement manners. Afterwards, the access network device performs output by column of the block interleaver. One CB on one OFDM symbol is correspondingly written to one row of the block interleaver. The "one CB" may be a complete CB on the OFDM symbol, or may be a partial CB with an element in the null state supplemented. In other words, when the CBs on each of the L1 OFDM symbols are written to the block interleaver, one complete CB on the OFDM symbol is correspondingly written to one row of the block interleaver, and the partial CB with the element in the null state supplemented on the OFDM symbol is correspondingly written to one row of the block interleaver. Therefore, elements in the row in which the partial CB is located include first elements of the partial CB and the element in the null state, where a quantity of the elements in the null state is D-D1, D1 is a quantity of the first elements in the partial CB, and D1 is an integer greater than or equal to 3.

With reference to the different manners that are described in S201 and in which the access network device supplements the element in the null state to the partial CB on each of the L1 OFDM symbols, corresponding to the block interleaver, a location of the element in the null state in the elements in the row in which the partial CB on one OFDM symbol is located is at least one of the following locations: The element in the null state is located before the 1st first element of the partial CB; optionally, the element in the null state is located after the last first element of the partial CB; optionally, some of the elements in the null state are located between two adjacent first elements of the partial CB.

The following specifically describes a relationship between a location of the element in the null state in the block interleaver and a location of the first element of the partial CB from three different aspects.

First aspect: This aspect is specific to a scenario in which the element in the null state may be located before the 1st first element of the partial CB or the element in the null state may be located after the last first element of the partial CB, and the L1 OFDM symbols include a first OFDM symbol and a second OFDM symbol adjacent to the first OFDM symbol. In this scenario, the first OFDM symbol includes a first partial CB of a CB whose quantity of elements is D, and the second OFDM symbol includes a remaining second partial CB of the CB whose quantity of elements is D. In other words, one CB whose quantity of elements is D is distributed on the first OFDM symbol and the second OFDM symbol.

Based on such a scenario, there may be a specific association relationship between the locations of the elements in the null state supplemented to the partial CBs on the two OFDM symbols. The association relationship is specifically as follows.

In one association relationship, in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB.

In another association relationship, in the block interleaver, if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

With reference to the foregoing two association relationships, a simple example is used herein to describe the location relationship between the elements in the null state supplemented to the partial CBs on the first OFDM symbol and the second OFDM symbol in the block interleaver. As shown in FIG. 9, the access network device determines that the first OFDM symbol includes CB0, CB1, and some elements (denoted as CB2') of CB2, where CB0 and CB1 are complete CBs. At the same time, the access network device determines that the second OFDM symbol includes the other elements (denoted as CB2") of CB2, CB3, and CB4, where CB3 and CB4 are complete CBs. In addition, it is assumed that one complete CB on one OFDM symbol includes 10 elements. NA in FIG. 9 indicates an element in the null state.

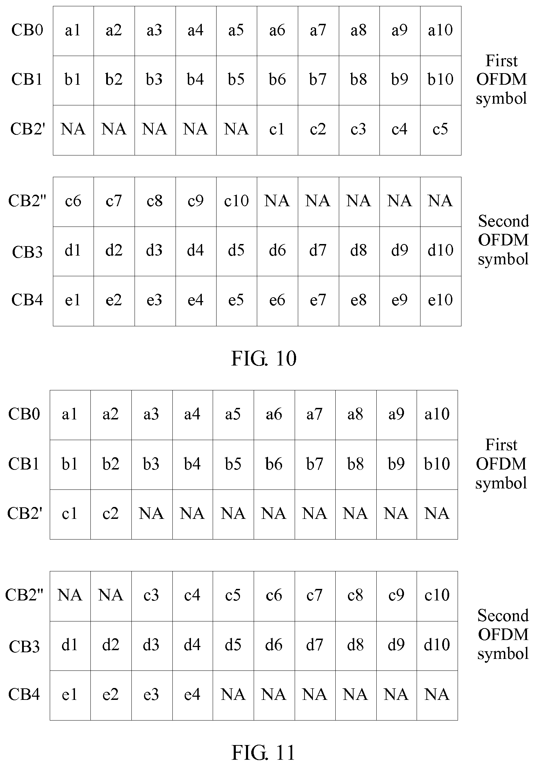

As shown in FIG. 9, an element in the null state in a row in which CB2' on the first OFDM symbol is located exists after the last first element (b5) of CB2', and an element in the null state in a row in which CB2" on the second OFDM symbol is located exists before the 1st first element (b6) of the CB2". Certainly, optionally, further referring to FIG. 10, an element in the null state in a row in which CB2' on the first OFDM symbol is located exists before the 1st first element (b1) of CB2', and an element in the null state in a row in which CB2" on the second OFDM symbol is located exists after the last first element (b10) of CB2".

Based on the example shown in FIG. 9, optionally, for the first OFDM symbol, if the CB writing order determined by the access network device is CB0-CB1-CB2', a sequence of the first OFDM symbol that is output by the block interleaver is a1,b1,c1,a2,b2,c2,a3,b3,c3,a4,b4,c4,a5,b5,c5,a6,b6,NA,a7,b7,NA,a8,b8,NA,a9,b9,NA ,a10,b10,NA; or if the CB writing order determined by the access network device is CB2'-CB1-CB0, a sequence of the first OFDM symbol that is output by the block interleaver is c1,b1,a1,c2,b2,a2,c3,b3,a3,c4,b4,a4,c5,b5,a5,NA,b5,a5,NA,b6,a6,NA,b7,a7,NA,b8,a8 ,NA,b9,a9,NA,b10,a10 . Certainly, the CB writing order determined by the access network device may further be CB2'-CB0-CB1, CB1-CB2'-CB0, or the like. In other words, the CB writing order of the first OFDM symbol that is determined by the access network device may be any sorting order of CB0, CB1, and CB2'.

Based on the example shown in FIG. 9, optionally, for the second OFDM symbol, if the CB writing order determined by the access network device is CB2"-CB3-CB4, a sequence of the second OFDM symbol that is output by the block interleaver may be NA,d1,e1,NA,d2,e2,NA,d3,e3,NA,d4,e4,NA,d5,e5,c6,d6,e6,c7,d7,e7,c8,d8,e8,c9,d9,e 9,c10,d10,e10; or if the CB writing order determined by the access network device is CB4-CB3-CB2", a sequence of the first OFDM symbol that is output by the block interleaver is e1,d1,NA,e2,d2,NA,e3,d3,NA,e4,d4,NA,e5,d5,NA,e6,d6,c6,e7,d7,c7,e8,d8,c8,e9,d9,c 9,e10,d10,c10. Certainly, the CB writing order of the second OFDM symbol that is determined by the access network device may further be CB2'-CB4-CB3, CB3-CB2"-CB4, or the like. In other words, the CB writing order of the second OFDM symbol that is determined by the access network device may be any sorting order of CB3, CB4, and CB2".

It should be noted that, there is a specific association relationship between the CB writing order of the first OFDM symbol and the CB writing order of the second OFDM symbol. For example, when the CB writing order of the first OFDM symbol is CB0-CB1-CB2', the CB writing order of the second OFDM symbol is CB4-CB3-CB2"; if the CB writing order of the first OFDM symbol is CB2'-CB1-CB0, the CB writing order of the second OFDM symbol is CB2"-CB3-CB4; if the CB writing order of the first OFDM symbol is CB2'-CB0-CB1, the CB writing order of the second OFDM symbol is CB3-CB2"-CB4; or if the CB writing order of the first OFDM symbol is CB1-CB2'-CB0, the CB writing order of the second OFDM symbol is CB2"-CB4-CB3. It can be learned from the description that, when the CB writing order of the first OFDM symbol is a first CB sorting order, the CB writing order of the second OFDM symbol is a reversed order of the first CB sorting order; and when the CB writing order of the first OFDM symbol is the reversed order of the first CB sorting order, the CB writing order of the second OFDM symbol is the first CB sorting order.

Therefore, as shown in FIG. 9, when the CB writing order of the first OFDM symbol is CB0-CB1-CB2', a corresponding sequence of the first OFDM symbol that is output by the block interleaver is a1,b1,c1,a2,b2,c2,a3,b3,c3,a4,b4,c4,a5,b5,c5,a6,b6,NA,a7,b7,NA,a8,b8,NA,a9,b9,NA ,a10,b10,NA; and when the CB writing order of the second OFDM symbol is CB4-CB3-CB2", a corresponding sequence of the second OFDM symbol that is output by the block interleaver is e1,d1,NA,e2,d2,NA,e3,d3,NA,e4,d4,NA,e5,d5,NA,e6,d6,c6,e7,d7,c7,e8,d8,c8,e9,d9,c 9,e10,d10,c10.

In conclusion, based on the CB writing orders of the first OFDM symbol and the second OFDM symbol and a relationship between locations of elements in the null state in rows in which partial CBs on different OFDM symbols are located, the sequence of each of the first OFDM symbol and the second OFDM symbol can be obtained by using a characteristic of writing by row and output by column of the block interleaver. Based on this method, the sequence of each of the L1 OFDM symbols can be obtained.

In addition, the OFDM symbols used as an example in FIG. 9 meet the first condition in the foregoing embodiment. For an OFDM symbol that meets the second condition in the foregoing embodiment, the access network device supplements an element in the null state to a partial CB based on the previously described location relationship between the element in the null state and the first element of the partial CB. As shown in FIG. 5, the symbol A in FIG. 5 is the first OFDM symbol, and the symbol B in FIG. 5 is the second OFDM symbol. In FIG. 5, the CBs on the first OFDM symbol are CB0, CB1, and CB2', and the CBs on the second OFDM symbol are CB2", CB3, and CB4'. Assuming that a CB writing order of writing the CBs on the first OFDM symbol to the block interleaver is CB0-CB1-CB2', a CB writing order of writing the CBs on the second OFDM symbol to the block interleaver is CB4'-CB3-CB2". The second OFDM symbol in FIG. 11 meets the second condition. Locations of elements in the null state shown in FIG. 11 are merely examples. Alternatively, supplementary elements in a row in which CB4' is located may exist before the 1st first element of CB4'.

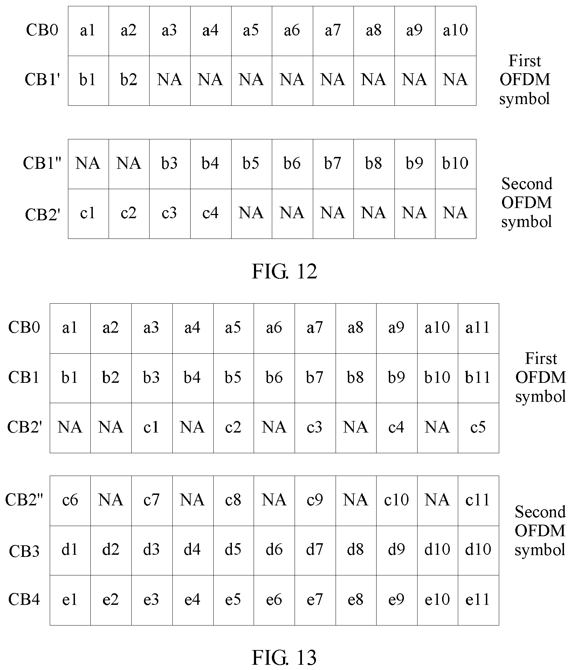

In addition, for an OFDM symbol that meets the third condition, the access network device supplements elements in the null state to the partial CBs based on the previously described location relationship between the element in the null state and the first element of the partial CB. As shown in FIG. 6, the symbol A in FIG. 6 is the first OFDM symbol, and the symbol B in FIG. 6 is the second OFDM symbol. In FIG. 6, the CBs on the first OFDM symbol are CB0 and CB1', and the CBs on the second OFDM symbol are CB1" and CB2'. Assuming that a CB writing order of writing the CBs on the first OFDM symbol to the block interleaver is CB0-CB1', a CB writing order of writing the CBs on the second OFDM symbol to the block interleaver is CB2"-CB1'. The second OFDM symbol in FIG. 12 meets the third condition. Locations of elements in the null state shown in FIG. 12 are merely examples. Alternatively, supplementary elements in a row in which CB1" is located may exist after the last first element of CB1" (provided that elements in the null state in a row in which CB1' on the first OFDM symbol is located exist before the 1st first element of CB1'). Similarly, supplementary elements in a row in which CB2' is located may alternatively exist before the 1st first element of CB2'.

Second aspect: This aspect is specific to a case in which the element in the null state may be located before the 1st first element of the partial CB or the element in the null state may be located after the last first element of the partial CB, and first elements of a partial CB on one of the L1 OFDM symbols may include the 1st element or the last element of a CB whose quantity of elements is D. In this scenario, for a location relationship between the element in the null state and the first element of the partial CB, refer to the following description.

Optionally, if the first elements of the partial CB on one of the L1 OFDM symbols include the 1st element of a CB whose quantity of elements is D, in the block interleaver, an element in the null state in a row in which the partial CB on the OFDM symbol is located exists after the last first element of the partial CB.

Optionally, if the first elements of the partial CB on one of the L1 OFDM symbols include the last element of a CB whose quantity of elements is D, in the block interleaver, an element in the null state in a row in which the partial CB on the OFDM symbol is located exists before the 1st first element of the partial CB.

Optionally, if the first elements of the partial CB on one of the L1 OFDM symbols include the 1st element of a CB whose quantity of elements is D, in the block interleaver, an element in the null state in a row in which the partial CB on the OFDM symbol is located exists before the 1st first element of the partial CB.

Optionally, if the first elements of the partial CB on one of the L1 OFDM symbols include the last element of a CB whose quantity of elements is D, in the block interleaver, an element in the null state in a row in which the partial CB on the OFDM symbol is located exists after the last first element of the partial CB.

In the scenario in the second aspect, when writing each of the L1 OFDM symbols to the block interleaver, the access network device still writes elements of the CBs on each OFDM symbol to the block interleaver based on the determined CB writing order. During specific writing, for an association relationship between CB writing orders of writing the adjacent first OFDM symbol and second OFDM symbol to the block interleaver, refer to the examples provided in the first aspect. Details are not described herein again. After elements on the CBs on the L1 OFDM symbols are written to the block interleaver by row, for each OFDM symbol, the block interleaver outputs a sequence of the OFDM symbol by column.

In combination with the locations of the elements in the null state in the first aspect and the second aspect, the elements in the null state are supplemented to the partial CBs in this application, so that when writing the CBs on the L1 OFDM symbols to the block interleaver and performing output by column, the access network device can stagger elements of one CB on the OFDM symbol. In this way, during resource mapping, elements of a plurality of CBs on one OFDM symbol can be evenly or approximately evenly distributed in frequency domain. In addition, a CB distributed across OFDM symbols has different subcarrier locations on two different OFDM symbols. Therefore, when a channel corresponding to a part of frequency bandwidth is in the deep fading state, for the CB distributed across OFDM symbols, a quantity of elements affected by deep fading is significantly reduced, and impact of deep fading on CB decoding performance is reduced, thereby ensuring stability of communications system performance.

Third aspect: This aspect is specific to a scenario in which some of the elements in the null state are located between two adjacent first elements of a partial CB on one OFDM symbol.

In this scenario, in the block interleaver, in a row in which a partial CB on one of the L1 OFDM symbols is located, the partial CB has at least two groups of two adjacent first elements, where a quantity of elements in the null state between two adjacent first elements in one group is the same as that of the other group. In other words, when the access network device supplements an element in the null state to the partial CB on one of the L1 OFDM symbols, the access network device supplements the element in the null state between two adjacent first elements of the partial CB on the OFDM symbol. Optionally, the access network device first determines a quantity P of elements in the null state between two adjacent first elements in the partial CB, where $P = floor((D - D1)/(D1 - 1))$. Because the partial CB includes D1 first elements, D1-1 is a quantity of element groups including two adjacent first elements of the partial CB, floor is an operation of rounding down to a nearest integer, and D-D1 is a total quantity of elements in the null state that should be supplemented to the partial CB, where the quantity P of elements in the null state between adjacent first elements in each group is obtained by dividing the total quantity by the quantity of element groups and rounding down to the nearest integer. Q remaining elements in the null state obtained after the rounding down to the nearest integer may be located before the $1^{st}$ first element of the partial CB or located after the last first element of the partial CB, where $Q = (D - D1) - (D1 - 1) * P$. In this way, the partial CB has at least two groups of adjacent first elements between which there are P elements in the null state.

For better understanding of the supplementing, by the access network device, the element in the null state to the partial CB on each of the L1 OFDM symbols, the following provides a simple example for description. As shown in FIG. 13, the first OFDM symbol includes CB0, CB1, and a partial CB (denoted as CB2'), and the second OFDM symbol includes a partial CB (denoted as CB2"), CB3, and CB4. A complete CB on one OFDM symbol includes 11 elements, that is, D = 11. For the first OFDM symbol, a quantity D1 of first elements of the partial CB is equal to 5; for the second OFDM symbol, a quantity D1 of first elements of the partial CB is equal to 6.

Based on this, for the first OFDM symbol, the access network device may use the foregoing formula $P = floor((D - D1)/(D1 - 1))$, to obtain P = 1. In other words, the first OFDM symbol has at least two groups of adjacent first elements between which there is one element in the null state. Afterwards, the access network device uses the foregoing formula $Q = (D - D1) - (D1 - 1) * P$, to obtain Q = 2. Therefore, the access network device may supplement the two elements in the null state before the $1^{st}$ first element of the partial CB on the first OFDM symbol or after the last first element of the partial CB on the first OFDM symbol. As shown in FIG. 13, the Q elements in the null state are located before the $1^{st}$ first element of the partial CB. For the second OFDM symbol, the access network device obtains P = 1 and Q = 0 through calculation by using the same manner. Locations of the elements in the null state are shown in FIG. 13.

Optionally, for either of the first OFDM symbol and the second OFDM symbol, the Q elements in the null state obtained through calculation may further be located after the $1^{st}$ first element of the partial CB or before the last first element of the partial CB.

After the access network device supplements the element in the null state to each of the L1 OFDM symbols, the access network device may write the CBs of each OFDM symbol to the block interleaver based on a determined CB writing order of each OFDM symbol, and perform output by column, to obtain the sequence of each OFDM symbol. A specific process of writing to the block interleaver is similar to those in the first aspect and the second aspect, and details are not described herein again.

In combination with the locations of the elements in the null state in the third aspect, the elements in the null state are supplemented to the partial CB in this application, so that when writing the CBs on the L1 OFDM symbols to the block interleaver and performing output by column, for a CB distributed across a plurality of OFDM symbols, the access network device can use interleaving by using the block interleaver or resource mapping to evenly or approximately evenly distribute, to resource locations mapped to each OFDM symbol, elements of the CB distributed across a plurality of OFDM symbols, that is, the elements of the CB distributed across a plurality of OFDM symbols are enabled to locate in different frequency domain resource locations mapped to each OFDM symbol, to obtain a relatively large frequency domain diversity gain. In addition, when a channel corresponding to a part of frequency bandwidth is in the deep fading state, for the CB distributed across OFDM symbols, a quantity of elements affected by deep fading is significantly reduced, and impact of deep fading on CB decoding performance is reduced, thereby ensuring stability of communications system performance.

In conclusion, when the access network device obtains the sequence of each of the L1 OFDM symbols by using the block interleaver, the access network device maps each element in the sequence of each OFDM symbol to frequency domain based on a frequency order or a subcarrier sequence number order of the OFDM symbol; when an element in the sequence is in the null state, ignores the element and maps a next element in the sequence, to obtain the mapped data; and further sends the mapped data to the terminal device.

According to the data transmission method provided in this application, the access network device supplements the element in the null state to the partial CN on each of the L1 OFDM symbols, so that when writing the CBs on the L1 OFDM symbols to the block interleaver and performing output by column, the access network device can stagger elements belonging to one CB on one OFDM symbol. In this way, during resource mapping, elements of a plurality of CBs on one OFDM symbol can be evenly or approximately evenly distributed in frequency domain, or elements of a CB distributed across a plurality of OFDM symbols can be evenly or approximately evenly distributed in resource locations mapped to all the OFDM symbols, to obtain a relatively large frequency domain diversity gain. In addition, when a channel corresponding to a part of frequency bandwidth is in the deep fading state, for the CB distributed across a plurality of OFDM symbols, a quantity of elements affected by deep fading is significantly reduced, and impact of deep fading on CB decoding performance is reduced, thereby ensuring stability of communications system performance.

Optionally, as a possible implementation, the access network device may further write the CBs on the L1 OFDM symbols to the block interleaver by column, and insert an element in the null state into each column in which a partial CB is located. An insertion location of an element in the null state in a column in which each partial CB is located may be inserted based on any of the foregoing three supplement manners. Afterwards, the access network device performs output by row of the block interleaver, to obtain the sequence of each OFDM symbol. In this optional manner, the block interleaver has D rows and M columns, where M is a quantity of CBs on one of the L1 OFDM symbols, and D is a quantity of elements of each of at least B-1 CBs. In addition, when CBs on one OFDM symbol are written to the block interleaver, one CB is correspondingly written to one column of the block interleaver. Elements in a column in which a partial CB on one OFDM symbol is located include first elements of the partial CB and an element in the null state, where a quantity of the elements in the null state is D-D1, D1 is a quantity of the first elements in the partial CB, and D1 is an integer greater than or equal to 3. Corresponding to this possible implementation, in the block interleaver, a location of the element in the null state in the elements in the column in which the partial CB on one OFDM symbol is located is at least one of the following locations: The element in the null state may be located before the 1st first element of the partial CB; optionally, the element in the null state may be located after the last first element of the partial CB; optionally, some of the elements in the null state may be located between two adjacent first elements of the partial CB.

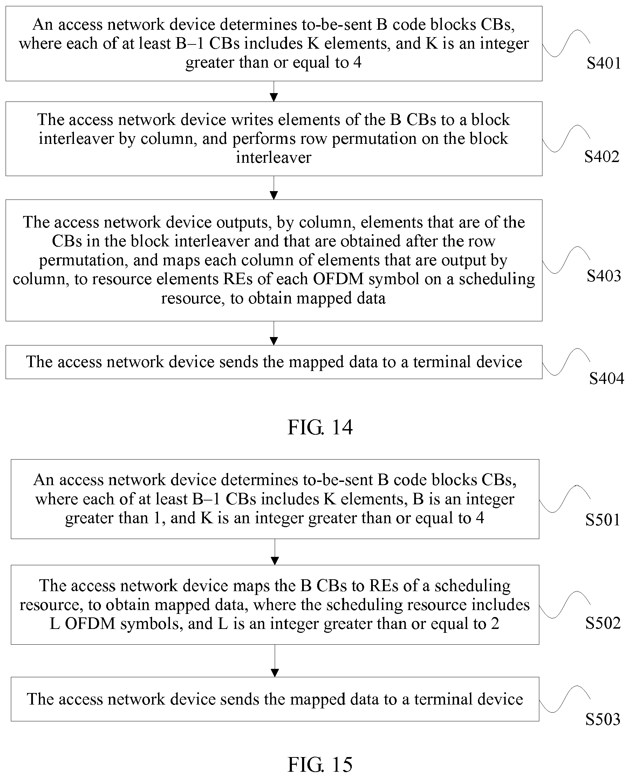

FIG. 14 is a schematic flowchart of Embodiment 4 of a data transmission method according to this application. This embodiment relates to a specific process in which an access network device writes elements of B CBs to a block interleaver, and maps an output result of the block interleaver to a scheduling resource, to obtain mapped data. As shown in FIG. 14, the method includes the following steps.

S401: The access network device determines to-be-sent B code blocks CBs, where each of at least B-1 CBs includes K elements, and K is an integer greater than or equal to 4.

Specifically, in this embodiment, for a specific process in which the access network device determines the to-be-sent B CBs, refer to the description of S101 in Embodiment 1. Details are not described herein again.

S402: The access network device writes elements of the B CBs to the block interleaver by column, and performs row permutation on the block interleaver.

S403: The access network device outputs, by column, elements that are of the CBs in the block interleaver and that are obtained after the row permutation, and maps each column of elements that are output by column, to resource elements REs of each OFDM symbol on a scheduling resource, to obtain mapped data.

Specifically, in this embodiment, after determining the B CBs, the access network device writes the elements of the B CBs to the block interleaver by column based on a preset writing order, and performs row permutation on the block interleaver to which the elements of the CBs are written; and outputs, by column, the elements that are of the CBs in the block interleaver and that are obtained after the row permutation, and maps each column of elements that are output by column, to REs on different OFDM symbols, where one OFDM symbol corresponds to one column, and one element corresponds to one RE on one OFDM symbol. A quantity of rows of the block interleaver is equal to a quantity of elements of each of the at least B-1 CBs, a quantity of columns of the block interleaver is equal to a quantity L of OFDM symbols on the scheduling resource, and L is greater than or equal to 2.

Based on the foregoing process, an obtained final result is that one OFDM symbol corresponds to one column of CB elements. In these CB elements, elements belonging to one CB are staggered. In this way, during resource mapping, the access network device outputs each column of elements by column, and maps each column of elements to frequency domain based on a frequency order or a subcarrier sequence number order of an OFDM symbol corresponding to each column of elements, to obtain mapped data. The foregoing interleaving operation of the block interleaver enables elements of a plurality of CBs on one OFDM symbol to be evenly or approximately evenly distributed in frequency domain, or enables elements of a CB distributed across a plurality of OFDM symbols to be evenly or approximately evenly distributed in resource locations mapped to all the OFDM symbols, to obtain a relatively large frequency domain diversity gain. In addition, when a channel corresponding to a part of frequency bandwidth is in a deep fading state, a quantity of elements affected by deep fading is significantly reduced, and impact of deep fading on CB decoding performance is reduced, thereby ensuring stability of communications system performance.

Optionally, when the access network performs the row permutation on the block interleaver to which the elements of the CBs are written, the following may be included: The block interleaver permutes the second row of data in the block interleaver other than the first row of data to the $(K+1)^{th}$ row. It should be noted that, each row of data in the block interleaver is actually elements of a CB in the B CBs.

S404: The access network device sends the mapped data to a terminal device.

Optionally, after determining the B CBs, the access network device may further write the elements of the B CBs to the block interleaver by row based on a preset writing order, and perform column permutation on the block interleaver to which the elements of the CBs are written; and output, by row, the elements that are of the CBs in the block interleaver and that are obtained after the column permutation, and map each row of elements that are output by row, to REs on different OFDM symbols, to obtain mapped data, where one OFDM symbol corresponds to one row, and one element corresponds to one RE on one OFDM symbol. A quantity of columns of the block interleaver is equal to a quantity of elements of each of the at least B-1 CBs, a quantity of rows of the block interleaver is equal to a quantity L of OFDM symbols on the scheduling resource, and L is greater than or equal to 2. The interleaving operation of the block interleaver herein enables elements of a plurality of CBs on one OFDM symbol to be evenly or approximately evenly distributed in frequency domain, or enables elements of a CB distributed across a plurality of OFDM symbols to be evenly or approximately evenly distributed in resource locations mapped to all the OFDM symbols, to obtain a relatively large frequency domain diversity gain. In addition, when a channel corresponding to a part of frequency bandwidth is in the deep fading state, a quantity of elements affected by deep fading is significantly reduced, and impact of deep fading on CB decoding performance is reduced, thereby ensuring stability of communications system performance.

According to the data transmission method provided in this application, the access network device writes the elements of the determined B CBs to the block interleaver by column, and performs row permutation on the block interleaver to which the elements of the CBs are written; outputs, by column, elements that are of the CBs in the block interleaver and that are obtained after the row permutation, and further maps each column of elements that are output by column, to REs of each OFDM symbol on the scheduling resource, to obtain mapped data; and sends the mapped data to the terminal device. In this method, one OFDM symbol corresponds to one column of CB elements. In the CB elements, elements belonging to one CB are staggered. In this way, during resource mapping, the foregoing interleaving operation of the block interleaver enables elements of a plurality of CBs on one OFDM symbol to be evenly or approximately evenly distributed in frequency domain, or enables elements of a CB distributed across a plurality of OFDM symbols to be evenly or approximately evenly distributed in resource locations mapped to all the OFDM symbols, to obtain a relatively large frequency domain diversity gain. In addition, when a channel corresponding to a part of frequency bandwidth is in the deep fading state, a quantity of elements affected by deep fading is significantly reduced, and impact of deep fading on CB decoding performance is reduced, thereby ensuring stability of communications system performance.

FIG. 15 is a schematic flowchart of Embodiment 5 of a data transmission method according to this application. This embodiment relates to a specific process in which an access network device evenly maps a CB distributed across OFDM symbols (a first CB in this embodiment) to REs, so that elements of the first CB can be evenly or approximately evenly distributed in frequency domain, to obtain a frequency domain diversity gain. The first CB herein means the CB distributed across OFDM symbols, that is, some elements of the first CB are located on one OFDM symbol, and the other elements of the first CB are located on another OFDM symbol. As shown in FIG. 15, the method includes the following steps.

S501: The access network device determines to-be-sent B code blocks CBs, where each of at least B-1 CBs includes K elements, B is an integer greater than 1, and K is an integer greater than or equal to 4.

Specifically, in this embodiment, for a specific process in which the access network device determines the to-be-sent B CBs, refer to the description of S101 in Embodiment 1. Details are not described herein again.

S502: The access network device maps the B CBs to REs of a scheduling resource, to obtain mapped data, where the scheduling resource includes L OFDM symbols, and L is an integer greater than or equal to 2.

The L OFDM symbols include a first OFDM symbol, and the first OFDM symbol includes K1 elements of the first CB. On the first OFDM symbol, at least two element groups correspond to a same quantity of interval elements. One element group is two adjacent elements of the first CB. The interval element is an element between two adjacent elements of the first CB in one element group other than an element of the first CB. K1 is an integer greater than or equal to 3 and less than K.

Specifically, in this embodiment, the L OFDM symbols include the first OFDM symbol. There may be one or more first OFDM symbols. The first OFDM symbol includes the K1 elements of the first CB. The other K-K1 elements of the first CB are located on another OFDM symbol adjacent to the first OFDM symbol. When the access network device determines the B CBs, the access network device maps elements of the B CBs to the REs of the scheduling resource, to obtain mapped data. The scheduling resource includes the L OFDM symbols, and L is an integer greater than or equal to 2. It should be noted that, REs on some of the L OFDM symbols may be occupied by another reference signal or control channel, while REs on the other OFDM symbols may be unoccupied. The access network device may map the elements of the B CBs to the unoccupied REs. It should be understood that, this embodiment is not strictly limited to mapping to unoccupied REs. In a subsequent communications system, there may be flexible mapping. To be specific, when a CB is mapped to occupied REs according to a specific rule, a contention-based manner or a priority sorting-based manner may be used to determine whether to forcibly occupy content in the REs, and place other content occupying the REs, for example, a reference signal, data, or signaling, to another resource. Occupying an RE herein may actually be that the network device determines, according to a specific rule, to send a signal, data, or signaling on the RE.

After resource mapping, on the first OFDM symbol, there are at least two element groups corresponding to a same quantity of interval elements. "One element group" described herein is two adjacent elements of the first CB. The interval element is an element between two adjacent elements of the first CB in one element group other than an element of the first CB. Optionally, the interval element may be an element of another complete CB on the first OFDM symbol. The complete CB is a CB with K elements all located on the first OFDM symbol. Optionally, the interval element may alternatively be an element of another first CB. K1 is an integer greater than or equal to 3 and less than K, to ensure that the first OFDM symbol has at least two element groups.

From distribution of the first CB mapped to the first OFDM symbol, it can be learned that, elements of all CBs on the first OFDM symbol are distributed at intervals or distributed through interleaving based on the elements of the first CB. In this way, the elements on the first OFDM symbol can be evenly or approximately evenly distributed on all frequency domain resources of the OFDM symbol (that is, evenly distributed on different subcarriers of the OFDM symbol), thereby greatly increasing a frequency domain diversity gain. In addition, when a channel of a part of frequency bandwidth is in deep fading, for a same CB, a quantity of elements affected by deep fading is significantly reduced, and impact of deep fading on CB decoding performance is reduced, thereby ensuring stability of communications system performance.

Optionally, during resource mapping, frequency domain mapping may be performed based on a frequency order or a subcarrier sequence number order of the first OFDM symbol, to obtain mapped data.

S503: The access network device sends the mapped data to a terminal device.

According to the data transmission method provided in this application, the access network device maps the determined B CBs to the REs of the scheduling resource, to obtain the mapped data. In the mapped data, the first OFDM symbol has at least two element groups corresponding to a same quantity of interval elements. In other words, the elements of all the CBs on the first OFDM symbol are distributed at intervals or distributed through interleaving based on the elements of the first CB, so that the elements on the first OFDM symbol can be evenly or approximately evenly distributed on all the frequency domain resources on the OFDM symbol (that is, evenly distributed on different subcarriers of the OFDM symbol), thereby greatly increasing a frequency domain diversity gain. In addition, when a channel corresponding to a part of frequency bandwidth is in a deep fading state, for a same CB, a quantity of elements affected by deep fading is significantly reduced, and impact of deep fading on CB decoding performance is reduced, thereby ensuring stability of communications system performance.

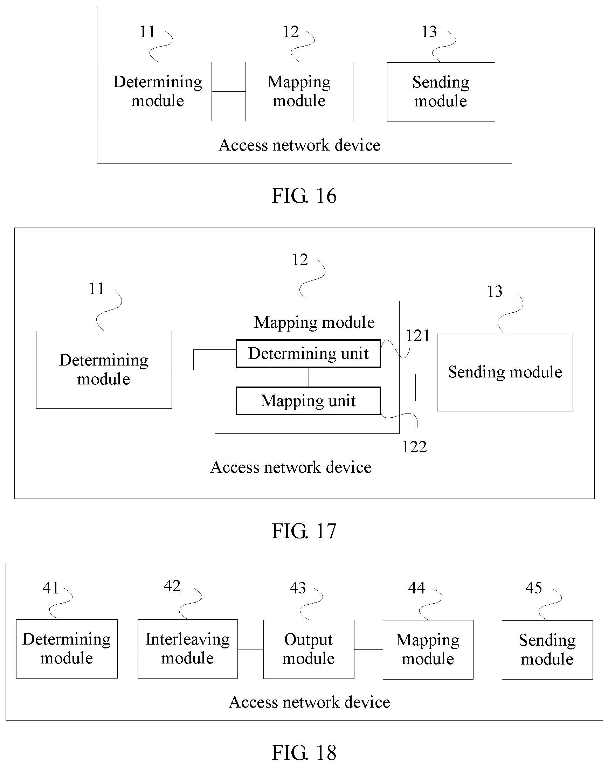

FIG. 16 is a schematic structural diagram of Embodiment 1 of an access network device according to this application. As shown in FIG. 16, the access network device may include a determining module 11, a mapping module 12, and a sending module 13.

Specifically, the determining module 11 is configured to determine to-be-sent B code blocks CBs, where each of at least B-1 CBs includes D elements, B is an integer greater than 1, and D is an integer greater than or equal to 4;

the mapping module 12 is configured to map the B CBs to resource elements REs of a scheduling resource, to obtain mapped data, where the scheduling resource includes L OFDM symbols, and L is an integer greater than or equal to 2, where

L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D; and

the sending module 13 is configured to send the mapped data to a terminal device.

The access network device provided in this application may execute the foregoing method embodiments. An implementation principle and technical effect thereof are similar, and details are not described herein again.

Optionally, each of L-L1 OFDM symbols includes elements of at least one complete CB and includes no element of a partial CB.

Optionally, all elements of the CB whose quantity of elements is D and to which the partial CB belongs are distributed on different subcarriers of two OFDM symbols.

Optionally, each of the B CBs is a data block corresponding to each data layer.

Optionally, if the L1 OFDM symbols meet the first condition or the second condition, refer to a schematic structural diagram of Embodiment 2 of an access network device shown in FIG. 17. Based on the embodiment shown in FIG. 16, further, the mapping module 12 includes a determining unit 121 and a mapping unit 122.

The determining unit 121 is configured to determine a sequence of each OFDM symbol on the scheduling resource, where a sequence of each of the L1 OFDM symbols includes second elements, first elements, and an element in a null state on the OFDM symbol, and the second elements are elements in one complete CB on the OFDM symbol; and

the mapping unit 122 is configured to map the sequence of each OFDM symbol on the scheduling resource to the REs of the scheduling resource, to obtain mapped data.

Optionally, if the L1 OFDM symbols meet the third condition, the determining unit 121 is configured to determine a sequence of each OFDM symbol on the scheduling resource, where a sequence of each of the L1 OFDM symbols includes first elements corresponding to the two partial CBs and an element in a null state on the OFDM symbol; and the determining unit 121 is configured to map the sequence corresponding to each OFDM symbol on the scheduling resource to the REs of the scheduling resource, to obtain mapped data.

Further, the determining unit 121 is specifically configured to write, by the access network device for each of the L1 OFDM symbols, elements of all CBs on the OFDM symbol by row of a block interleaver, and perform output by column of the block interleaver, to obtain the sequence of each of the L1 OFDM symbols, where the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs included on the OFDM symbol; and

in the block interleaver, elements in a row in which the partial CB is located include first elements of the partial CB and an element in the null state, where a quantity of the elements in the null state is D-D1, D1 is a quantity of the first elements in the partial CB, and D1 is an integer greater than or equal to 3.

Optionally, a location of the element in the null state in the elements in the row in which the partial CB is located is at least one of the following locations:

the element in the null state is located before the 1st first element of the partial CB;

the element in the null state is located after the last first element of the partial CB; or

some of the elements in the null state are located between two adjacent first elements of the partial CB.

Further, the mapping unit 122 is configured to map each element in the sequence of each OFDM symbol on the scheduling resource to frequency domain based on a frequency order or a subcarrier sequence number order of the OFDM symbol, and when an element in the sequence is in the null state, ignore the element and map a next element in the sequence, to obtain mapped data.

Optionally, the L1 OFDM symbols include a first OFDM symbol and a second OFDM symbol adjacent to the first OFDM symbol, the first OFDM symbol includes a first partial CB of a CB whose quantity of elements is D, and the second OFDM symbol includes a remaining second partial CB of the CB whose quantity of elements is D; and

in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB; or

if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

Optionally, if first elements of the partial CB on one of the L1 OFDM symbols include the 1st element of a CB whose quantity of elements is D, in the block interleaver, an element in the null state in a row in which the partial CB on the OFDM symbol is located exists after the last first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists before the 1st first element of the partial CB.

Optionally, if first elements of the partial CB on one of the L1 OFDM symbols include the 1st element of a CB whose quantity of elements is D, in the block interleaver, an element in the null state in a row in which the partial CB on the OFDM symbol is located exists before the 1st first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists after the last first element of the partial CB.

Optionally, in the block interleaver, in a row in which the partial CB on one of the L1 OFDM symbols is located, the partial CB has at least two groups of two adjacent first elements, where a quantity of elements in the null state between two adjacent first elements in one group is the same as that of the other group.

Optionally, in the block interleaver, in the row in which the partial CB on one of the L1 OFDM symbols is located, the partial CB has at least two groups of two adjacent first elements between which there are P elements in the null state, where

$$P = floor((D - D1)/(D1 - 1)),$$

where floor is an operation of rounding down to a nearest integer, Q remaining elements in the null state are located before the 1st first element of the partial CB or located after the last first element of the partial CB, and Q = (D - D1) - (D1 - 1) ∗ P.

Optionally, the determining unit 121 is specifically configured to determine, based on a quantity of CBs on each of the L1 OFDM symbols and a preset CB sorting order, a CB writing order of writing the CBs on each OFDM symbol to the block interleaver; and write the elements of all the CBs on each of the OFDM symbols by row of the block interleaver based on the CB writing order corresponding to each OFDM symbol, and perform output by column of the block interleaver, to obtain the sequence corresponding to each of the L1 OFDM symbols.

Optionally, the L1 OFDM symbols include a first OFDM symbol and a second OFDM symbol adjacent to the first OFDM symbol; and if a CB writing order of the first OFDM symbol is a first CB sorting order, a CB writing order of the second OFDM symbol is a reversed order of the first CB sorting order; or

if a CB writing order of the first OFDM symbol is a reversed order of the first CB sorting order, a CB writing order of the second OFDM symbol is the first CB sorting order.

The access network device provided in this application may execute the foregoing method embodiments. An implementation principle and technical effect thereof are similar, and details are not described herein again.

FIG. 18 is a schematic structural diagram of Embodiment 3 of an access network device according to this application. As shown in FIG. 18, the access network device includes a determining module 41, an interleaving module 42, an output module 43, a mapping module 44, and a sending module 45.

Specifically, the determining module 41 is configured to determine to-be-sent B code blocks CBs, where each of at least B-1 CBs includes K elements, and K is an integer greater than or equal to 4;

the interleaving module 42 is configured to write elements of the B CBs to a block interleaver by column, and perform row permutation on the block interleaver;

the output module 43 is configured to output, by column, elements that are of the CBs in the block interleaver and that are obtained after the row permutation;

the mapping module 44 is configured to map each column of elements that are output by column, to resource elements REs of each OFDM symbol on a scheduling resource, to obtain mapped data; and

the sending module 45 is configured to send the mapped data to a terminal device, where

the scheduling resource includes L OFDM symbols, each OFDM symbol has K REs, the block interleaver has K rows and L columns, and L is an integer greater than or equal to 2.

Optionally, the mapping module 44 is specifically configured to map each column of elements that are output by column, to frequency domain based on a frequency order or a subcarrier sequence number order of an OFDM symbol corresponding to each column of elements, to obtain mapped data.

Optionally, the interleaving module 42 is specifically configured to permute the second row of data in the block interleaver other than the first row of data in the block interleaver to the (K+1)th row.

The access network device provided in this application may execute the foregoing method embodiments. An implementation principle and technical effect thereof are similar, and details are not described herein again.

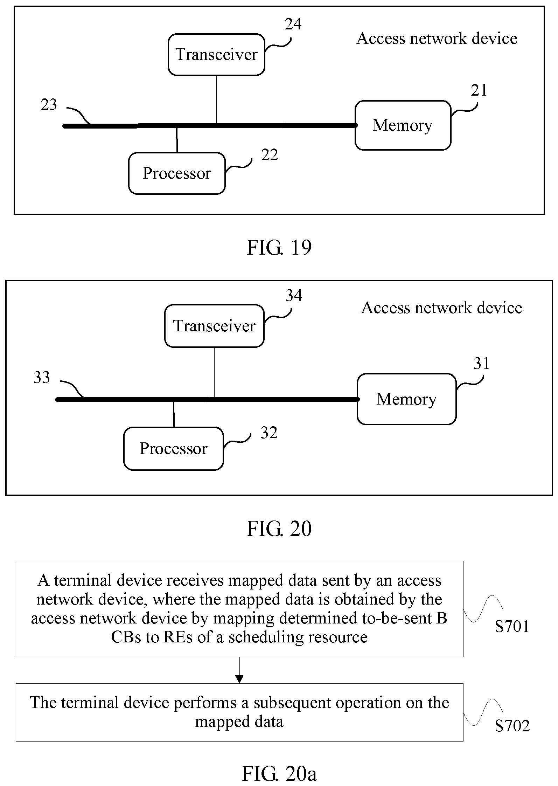

FIG. 19 is a schematic structural diagram of Embodiment 4 of an access network device according to this application. As shown in FIG. 19, the access network device may include a memory 21, a processor 22, at least one communications bus 23, and a transceiver 24. The communications bus 23 is configured to implement a communication connection between components. The memory 161 may include a high-speed RAM memory, or may further include a nonvolatile memory NVM, for example, at least one magnetic disk storage. The memory 21 may store various programs, configured to complete various processing functions and implement the method steps in the embodiments. In this embodiment, the transceiver 24 may be a radio frequency processing module or a baseband processing module in the access network device. The transceiver 24 may include a transmitter and a receiver. The transmitter and the receiver may be disposed separately, or may be integrated together. The transmitter and the receiver each may be coupled to the processor 22.

In this embodiment, the processor 22 is configured to determine to-be-sent B code blocks CBs, and map the B CBs to resource elements REs of a scheduling resource, to obtain mapped data, where each of at least B-1 CBs includes D elements, B is an integer greater than 1, and D is an integer greater than or equal to 4; and the scheduling resource includes L OFDM symbols, and L is an integer greater than or equal to 2; and the transceiver 24 is configured to send the mapped data to a terminal device, where

L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D.

Optionally, each of L-L1 OFDM symbols includes elements of at least one complete CB and includes no element of a partial CB.

Optionally, all elements of the CB whose quantity of elements is D and to which the partial CB belongs are distributed on different subcarriers of two OFDM symbols.

Optionally, each of the B CBs is a data block corresponding to each data layer.

Optionally, if the L1 OFDM symbols meet the first condition or the second condition,

the processor 22 is specifically configured to determine a sequence of each OFDM symbol on the scheduling resource; and map the sequence of each OFDM symbol on the scheduling resource to the REs of the scheduling resource, to obtain mapped data; where

a sequence of each of the L1 OFDM symbols includes second elements, first elements, and an element in a null state on the OFDM symbol, and the second elements are elements in one complete CB on the OFDM symbol.

Optionally, if the L1 OFDM symbols meet the third condition,

the processor 22 is specifically configured to determine a sequence of each OFDM symbol on the scheduling resource; and map the sequence corresponding to each OFDM symbol on the scheduling resource to the REs of the scheduling resource, to obtain mapped data; where a sequence of each of the L1 OFDM symbols includes first elements corresponding to the two partial CBs and an element in a null state on the OFDM symbol.

Optionally, the processor 22 is specifically configured to write, by the access network device for each of the L1 OFDM symbols, elements of all CBs on the OFDM symbol by row of a block interleaver, and perform output by column of the block interleaver, to obtain the sequence of each of the L1 OFDM symbols, where the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs included on the OFDM symbol; and

in the block interleaver, elements in a row in which the partial CB is located include first elements of the partial CB and an element in the null state, where a quantity of the elements in the null state is D-D1, D1 is a quantity of the first elements in the partial CB, and D1 is an integer greater than or equal to 3.

Optionally, in the block interleaver, a location of the element in the null state in the elements in the row in which the partial CB is located is at least one of the following locations:

the element in the null state is located before the 1$^{st}$ first element of the partial CB;

the element in the null state is located after the last first element of the partial CB; or

some of the elements in the null state are located between two adjacent first elements of the partial CB.

Optionally, the processor 22 is specifically configured to map each element in the sequence of each OFDM symbol on the scheduling resource to frequency domain based on a frequency order or a subcarrier sequence number order of the OFDM symbol, and when an element in the sequence is in the null state, ignore the element and map a next element in the sequence, to obtain mapped data.

Optionally, the L1 OFDM symbols include a first OFDM symbol and a second OFDM symbol adjacent to the first OFDM symbol, the first OFDM symbol includes a first partial CB of a CB whose quantity of elements is D, and the second OFDM symbol includes a remaining second partial CB of the CB whose quantity of elements is D; and

in the block interleaver, if an element in the null state in a row in which the first partial CB on the first OFDM symbol is located exists after the last first element of the first partial CB, an element in the null state in a row in which the second partial CB on the second OFDM symbol is located exists before the 1$^{st}$ first element of the second partial CB; or

if an element in the null state in a row in which the first partial CB on the first OFDM symbol is located exists before the 1$^{st}$ first element of the first partial CB, an element in the null state in a row in which the second partial CB on the second OFDM symbol is located exists after the last first element of the second partial CB.

Optionally, if first elements of the partial CB on one of the L1 OFDM symbols include the 1$^{st}$ element of a CB whose quantity of elements is D, in the block interleaver, an element in the null state in a row in which the partial CB on the OFDM symbol is located exists after the last first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists before the 1st first element of the partial CB.

Optionally, if first elements of the partial CB on one of the L1 OFDM symbols include the 1st element of a CB whose quantity of elements is D, in the block interleaver, an element in the null state in a row in which the partial CB on the OFDM symbol is located exists before the 1st first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists after the last first element of the partial CB.

Optionally, in the block interleaver, in a row in which the partial CB on one of the L1 OFDM symbols is located, the partial CB has at least two groups of two adjacent first elements, where a quantity of elements in the null state between two adjacent first elements in one group is the same as that of the other group.

Optionally, in the block interleaver, in the row in which the partial CB on one of the L1 OFDM symbols is located, the partial CB has at least two groups of two adjacent first elements between which there are P elements in the null state, where

$$P = \mathrm{floor}((D - D1)/(D1 - 1)),$$

where floor is an operation of rounding down to a nearest integer, Q remaining elements in the null state are located before the 1st first element of the partial CB or located after the last first element of the partial CB, and Q = (D - D1) - (D1 - 1) * P.

Optionally, the processor 22 is specifically configured to determine, based on a quantity of CBs on each of the L1 OFDM symbols and a preset CB sorting order, a CB writing order of writing the CBs on each OFDM symbol to the block interleaver; and write the elements of all the CBs on each of the OFDM symbols by row of the block interleaver based on the CB writing order corresponding to each OFDM symbol, and perform output by column of the block interleaver, to obtain the sequence corresponding to each of the L1 OFDM symbols.

Optionally, the L1 OFDM symbols include a first OFDM symbol and a second OFDM symbol adjacent to the first OFDM symbol; and

if a CB writing order of the first OFDM symbol is a first CB sorting order, a CB writing order of the second OFDM symbol is a reversed order of the first CB sorting order; or

if a CB writing order of the first OFDM symbol is a reversed order of the first CB sorting order, a CB writing order of the second OFDM symbol is the first CB sorting order.

The access network device provided in this application may execute the foregoing method embodiments. An implementation principle and technical effect thereof are similar, and details are not described herein again.

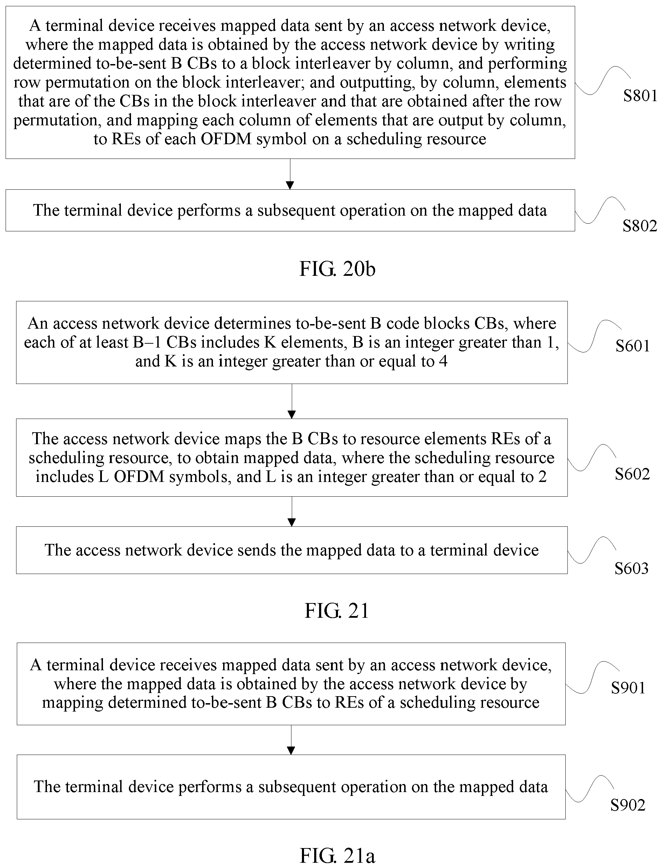

FIG. 20 is a schematic structural diagram of Embodiment 5 of an access network device according to this application. As shown in FIG. 20, the access network device may include a memory 31, a processor 32, at least one communications bus 33, and a transceiver 34. The communications bus 33 is configured to implement a communication connection between components. The memory 31 may include a high-speed RAM memory, or may further include a nonvolatile memory NVM, for example, at least one magnetic disk storage. The memory 31 may store various programs, configured to complete various processing functions and implement the method steps in the embodiments. In this embodiment, the transceiver 34 may be a radio frequency processing module or a baseband processing module in the access network device. The transceiver 34 may include a transmitter and a receiver. The transmitter and the receiver may be disposed separately, or may be integrated together. The transmitter and the receiver each may be coupled to the processor 32.

In this embodiment, the processor 32 is configured to determine to-be-sent B code blocks CBs; write elements of the B CBs to a block interleaver by column, and perform row permutation on the block interleaver; and output, by column, elements that are of the CBs in the block interleaver and that are obtained after the row permutation, and map each column of elements that are output by column, to resource elements REs of each OFDM symbol on a scheduling resource, to obtain mapped data; where each of at least B-1 CBs includes K elements, and K is an integer greater than or equal to 4; and

the transceiver 34 is configured to send the mapped data to a terminal device, where

the scheduling resource includes L OFDM symbols, each OFDM symbol has K REs, the block interleaver has K rows and L columns, and L is an integer greater than or equal to 2.

Optionally, the processor 32 is specifically configured to map each column of elements that are output by column, to frequency domain based on a frequency order or a subcarrier sequence number order of an OFDM symbol corresponding to each column of elements, to obtain mapped data.

Optionally, the processor 32 is specifically configured to permute the second row of data in the block interleaver other than the first row of data in the block interleaver to the (K+1)th row.

The access network device provided in this application may execute the foregoing method embodiments. An implementation principle and technical effect thereof are similar, and details are not described herein again.

The following further describes another embodiment of this application with reference to FIG. 20a. As shown in FIG. 20a, this embodiment includes the following steps.

S701: A terminal device receives mapped data sent by an access network device, where the mapped data is obtained by the access network device by mapping determined to-be-sent B CBs to REs of a scheduling resource.

Each of at least B-1 CBs includes D elements, B is an integer greater than 1, and D is an integer greater than or equal to 4.

The scheduling resource includes L OFDM symbols, and L is an integer greater than or equal to 2; and L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D.

S702: The terminal device performs a subsequent operation on the mapped data.

Specifically, this embodiment describes, from a perspective of the terminal device, a specific case in which the terminal device receives the mapped data. After receiving the mapped data on a corresponding time-frequency resource, the terminal device may perform processing operations such as decoding, parsing, and demodulation on the mapped data, to obtain data required by the terminal device. For a specific process about how the access network device obtains the mapped data, refer to the description of the foregoing embodiments. Details are not described herein again.

The following further describes another embodiment of this application with reference to FIG. 20b. As shown in FIG. 20b, this embodiment includes the following steps.

S801: A terminal device receives mapped data sent by an access network device, where the mapped data is obtained by the access network device by writing determined to-be-sent B CBs to a block interleaver by column, and performs row permutation on the block interleaver; and outputs, by column, elements that are of the CBs in the block interleaver and that are obtained after the row permutation, and maps each column of elements that are output by column, to REs of each OFDM symbol on a scheduling resource.

Each of at least B-1 CBs includes K elements, and K is an integer greater than or equal to 4; and the scheduling resource includes L OFDM symbols, each OFDM symbol has K REs, the block interleaver has K rows and L columns, and L is an integer greater than or equal to 2.

S802: The terminal device performs a subsequent operation on the mapped data.

Specifically, this embodiment describes, from a perspective of the terminal device, a specific case in which the terminal device receives the mapped data. After receiving the mapped data on a corresponding time-frequency resource, the terminal device may perform processing operations such as decoding, parsing, and demodulation on the mapped data, to obtain data required by the terminal device.

For a specific process about how the access network device obtains the mapped data, refer to the description of the foregoing method embodiments. Details are not described herein again.

The following further describes another embodiment of this application with reference to FIG. 21.

Step S601: An access network device determines to-be-sent B code blocks CBs, where each of at least B-1 CBs includes K elements, B is an integer greater than 1, and K is an integer greater than or equal to 4.

Step S602: The access network device maps the B CBs to resource elements REs of a scheduling resource, to obtain mapped data, where the scheduling resource includes L OFDM symbols, and L is an integer greater than or equal to 2.

The L OFDM symbols include a first OFDM symbol, and the first OFDM symbol includes elements of the first CB. The first OFDM symbol includes more than 2 and less than K elements of the first CB. The first OFDM symbol has at least two different pairs of elements of the first CB. Based on a frequency domain order mapped to the two pairs of elements of the first CB on the first OFDM symbol, there are $\Delta$ elements between one pair of elements of the first CB, and there are also $\Delta$ elements between the other pair of elements of the first CB, where $\Delta$ is an integer.

Step S603: The access network device sends the mapped data to a terminal device.

As a specific example, the access network device maps the B CBs to the resource elements REs of the scheduling resource, where the scheduling resource includes the L OFDM symbols, and L is an integer greater than or equal to 2. The L OFDM symbols include the first OFDM symbol, and the first OFDM symbol includes the first CB but includes only some elements of the first CB. The other elements of the first OFDM symbol may be included by another OFDM symbol. Therefore, because each CB includes K elements, the first OFDM symbol includes more than 2 and less than K elements of the first CB. This can at least ensure that there are at least three elements of the first CB, so that interleaving can be formed for some elements. In addition, the first OFDM symbol includes at least two different pairs of elements of the first CB. There are Δ elements between one pair of elements of the first CB, and there are also Δ elements between the other pair of elements of the first CB. For example, the first OFDM symbol includes a first pair of elements a1 and a2 of the first CB, and includes a second pair of elements a3 and a4 of the first CB, where a1, a2, a3, and a4 are located in different frequency domain locations on the OFDM symbol, there are Δ elements between a1 and a2, and there are also Δ elements between a3 and a4. It should be understood that, the two different pairs of elements of the first CB indicate that the first pair of elements of the first CN is different from the second pair of elements of the first CN. To be specific, if the first pair of elements is a1 and a2, the second pair of elements cannot be a1 and a2, but may be a3 and a4, or the second pair of elements may be a1 and a3. For example, the first CB has a total of 15 elements, where three elements are located on the first OFDM symbol, and the three OFDM elements are CB11, CB12, and CB13, and an ascending frequency domain order on the first OFDM symbol is as follows:

CBx1, CBy1, CB12, CBx3, CBx6, CBx7, CB11, CBx3, CBx4, CBy3, CB13, CBy4

There are three elements CBx3, CBx6, and CBx7 between one pair of elements CB11 and CB12 of the first CB, and there are three elements CBx3, CBx4, and CBy3 between the other pair of elements CB11 and CB13 of the first CB.

In an alternative solution, in step S602, the access network device maps the B CBs to resource elements REs of a scheduling resource, where the scheduling resource includes L OFDM symbols, and L is an integer greater than or equal to 2. There are two sets of elements of the first CB. One set of elements of the first CB is {a1, a2}, and the other set of elements of the first CB is {a3, a4}. {a1, a2} and {a3, a4} are different and meet Δ1 = Δ2, where Δ1 is a quantity of elements between locations of a1 and a2 on the OFDM symbol, and Δ2 is a quantity of elements between locations of a3 and a4 on the OFDM symbol. It should be understood that, the steps in FIG. 21 may be properly combined with the foregoing embodiments.

An interleaver in this application may be one or more units and/or modules that can complete interleaving operations. In the method embodiments of this application, for example, writing by row of the interleaver and output by column of the interleaver may mean performing calculation and mapping based on a method of the interleaver, to obtain a sequence. A method for implementing processing of the interleaver is actually a calculation manner, and may not exist in the interleaver but may be an operation manner for implementing a function of the interleaver. Different input parameters may affect the calculation manner of the interleaver, and may correspond to different calculation manners. For example, in the foregoing embodiments, the writing by row and the block-based column output may be merely a process in which after storage is performed based on different CBs, values are retrieved from the different CBs according to an order, to establish a sequence in ascending order in frequency domain. For example, if there are only three CBs, the 1st element of CB1 is retrieved, the 1st element of CB2 is retrieved, and then the 1st element of CB3 is retrieved, and afterwards the 2nd element of CB1 is retrieved, and by analogy. After one CB is completely retrieved, a next incompletely retrieved CB is directly retrieved. In an example similar to the foregoing interleaving manner, there are a total of B CBs: CB(0), ..., CB(B), where B-1 CBs each include D element blocks, and the B-1 CBs are CB(0), ..., CB(B-2). All element blocks of CB(n) may be CB(n,0), ..., CB(n,D-1), where n is the B-1 CBs. CB(B-1) has a total of C element blocks, where C is an integer greater than 1 and less than D-1. When C = D, that is, in a special case, there are a total of B CBs, and each CB includes D elements. All element blocks of CB(B) may be CB(B,0), ..., CB(B,C-1). As a simple interleaving manner, the interleaver may map the B CBs in the following manner: CB(0,0), CB(1,0), ..., CB(B-2,0), CB(B-1,0), CB(0,1), CB(1,1), ..., CB(B-2,1), CB(B-1,1), ..., CB(0,C-1), CB(1,C-1), ..., CB(B-2,C-1), CB(B-1,C-1), CB(0,C), CB(1,C), ...CB(B-3,C), CB(B-2,C), CB(0,C+1), CB(1,C+1), ..., CB(B-2,C+1), CB(0,C+2), ..., CB(0,D-1), CB(1,D-1), ..., CB(B-2,D-1). In the apparatus embodiments of this application, the interleaver may be a function of implementing interleaving by using one or more calculation units, or may even be an implementation process of reading computer program code of a stored rule, for mapping to a chip. For example, any unit or a storage apparatus inside a chip stores the elements of the B CBs. In a mapping process, mapping rule software or a corresponding hardware module is invoked to directly retrieve the stored elements of the B CBs according to a preset order, to determine an order of all to-be-sent OFDM symbols. This order can implement a calculation rule constrained in the embodiments to achieve a purpose of improving system performance. Alternatively, a sequence in the foregoing interleaving manner may be obtained directly based on the CBs, and elements included by each OFDM symbol and an order of the OFDM symbol are determined.

It should be understood that, the solution described in FIG. 21 may be properly combined with the foregoing solutions, for example, an interleaver operation. Details are not described herein again. The solutions described in the embodiments of this application may alternatively be implemented by using a chip. A contact of the chip may be connected to an integrated circuit board, to complete data input and output. The chip completes processes such as determining and mapping. It should be understood that, the chip may include a necessary storage function, for example, use a triode, a MOS circuit, or an internal circuit that can implement a corresponding function, to implement a storage function in a case without power failure, to store determined and mapped data and an intermediate variable for completing invoking. The embodiments of this application may alternatively be a chip and a storage medium. The chip and the storage medium are connected by using an interface and a circuit board route. The chip completes calculation and processing, and when necessary, for example, during initialization, invokes a program in a memory, and stores and reads a variable in a calculation process.

The following further describes another embodiment of this application with reference to FIG. 21a. As shown in FIG. 21a, this embodiment includes the following steps.

S901: A terminal device receives mapped data sent by an access network device, where the mapped data is obtained by the access network device by mapping determined to-be-sent B CBs to REs of a scheduling resource.

Each of at least B-1 CBs includes K elements, B is an integer greater than 1, and K is an integer greater than or equal to 4; and the scheduling resource includes L OFDM symbols, and L is an integer greater than or equal to 2.

The L OFDM symbols include a first OFDM symbol, and the first OFDM symbol includes elements of the first CB. The first OFDM symbol includes more than 2 and less than K elements of the first CB. The first OFDM symbol has at least two different pairs of elements of the first CB. Based on a frequency domain order mapped to the two pairs of elements of the first CB on the first OFDM symbol, there are $\Delta$ elements between one pair of elements of the first CB, and there are also $\Delta$ elements between the other pair of elements of the first CB, where $\Delta$ is an integer.

S902: The terminal device performs a subsequent operation on the mapped data.

Specifically, this embodiment describes, from a perspective of the terminal device, a specific case in which the terminal device receives the mapped data. After receiving the mapped data on a corresponding time-frequency resource, the terminal device may perform processing operations such as decoding, parsing, and demodulation on the mapped data, to obtain data required by the terminal device.

For a specific process about how the access network device obtains the mapped data, refer to the description of the method embodiment shown in FIG. 21. Details are not described herein again.

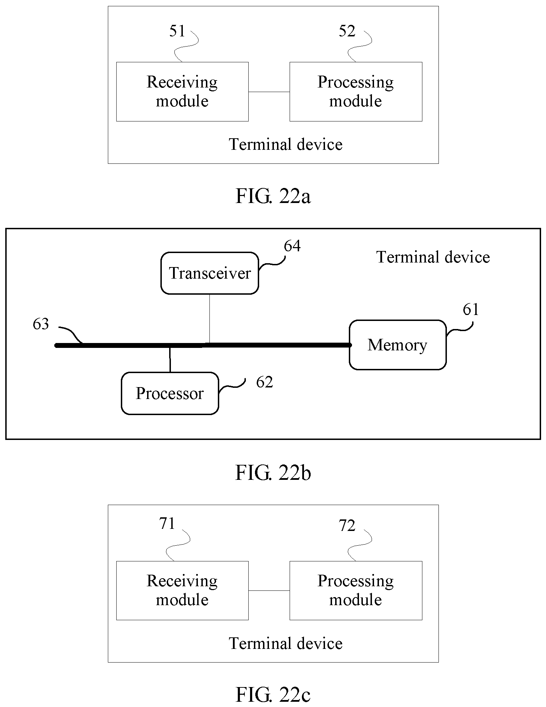

FIG. 22a is a schematic structural diagram of Embodiment 1 of a terminal device according to this application. As shown in FIG. 22a, the terminal device may include a receiving module 51 and a processing module 52.

Specifically, the receiving module 51 is configured to receive mapped data sent by an access network device, where the mapped data is obtained by the access network device by mapping determined to-be-sent B CBs to REs of a scheduling resource, where each of at least B-1 CBs includes D elements, B is an integer greater than 1, and D is an integer greater than or equal to 4; and the scheduling resource includes L OFDM symbols, and L is an integer greater than or equal to 2; and L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D; and the processing module 52 is configured to perform a subsequent operation on the mapped data.

The terminal device provided in this application may execute the method in FIG. 20a. An implementation principle and technical effect thereof are similar, and details are not described herein again.

FIG. 22b is a schematic structural diagram of Embodiment 2 of terminal device according to this application. As shown in FIG. 22b, the terminal device may include a memory 61, a processor 62, at least one communications bus 63, and a transceiver 64. The communications bus 63 is configured to implement a communication connection between components. The memory 61 may include a high-speed RAM memory, or may further include a nonvolatile memory NVM, for example, at least one magnetic disk storage. The memory 61 may store various programs, configured to complete various processing functions and implement the method steps in the embodiments. In this embodiment, the transceiver 64 may be a radio frequency processing module or a baseband processing module in the terminal device. The transceiver 64 may include a transmitter and a receiver. The transmitter and the receiver may be disposed separately, or may be integrated together. The transmitter and the receiver each may be coupled to the processor 62.

In this embodiment, the transceiver 64 is configured to receive mapped data sent by an access network device, where the mapped data is obtained by the access network device by mapping determined to-be-sent B CBs to REs of a scheduling resource, where each of at least B-1 CBs includes D elements, B is an integer greater than 1, and D is an integer greater than or equal to 4; and the scheduling resource includes L OFDM symbols, and L is an integer greater than or equal to 2; and L1 of the L OFDM symbols meet one of a first condition, a second condition, or a third condition, where the first condition is that one OFDM symbol includes elements of one partial CB and elements of at least one complete CB; the second condition is that one OFDM symbol includes elements of at least one complete CB and elements of two other partial CBs; the third condition is that one OFDM symbol includes elements of two partial CBs; at least one of the L1 OFDM symbols has at least two groups of adjacent first elements, where a quantity of elements of another CB between adjacent first elements in one group is the same as that of the other group, and the first elements are elements in one partial CB; and the partial CB is a part of a CB whose quantity of elements is D; and

the processor 62 is configured to perform a subsequent operation on the mapped data.

Optionally, each of L-L1 OFDM symbols includes elements of at least one complete CB and includes no element of a partial CB.

Optionally, all elements of the CB whose quantity of elements is D and to which the partial CB belongs are distributed on different subcarriers of two OFDM symbols.

Optionally, each of the B CBs is a data block corresponding to each data layer.

Optionally, if the L1 OFDM symbols meet the first condition or the second condition, the mapped data received by the transceiver 64 is specifically: mapped data that is obtained by the access network device by determining a sequence of each OFDM symbol on the scheduling resource by using the B CBs, and mapping the sequence corresponding to each OFDM symbol on the scheduling resource to the REs of the scheduling resource, where a sequence of each of the L1 OFDM symbols includes second elements, first elements, and an element in a null state on the OFDM symbol, and the second elements are elements in one complete CB on the OFDM symbol.

Optionally, if the L1 OFDM symbols meet the third condition, the mapped data received by the transceiver 64 is specifically: mapped data that is obtained by the access network device by determining a sequence of each OFDM symbol on the scheduling resource by using the B CBs, and mapping the sequence corresponding to each OFDM symbol on the scheduling resource to the REs of the scheduling resource, where a sequence of each of the L1 OFDM symbols includes first elements corresponding to the two partial CBs and an element in a null state.

Optionally, for each of the L1 OFDM symbols, the foregoing sequence is obtained by the access network device by writing elements of all CBs on the OFDM symbol by row of a block interleaver, and performing output by column of the block interleaver, where the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs included on the OFDM symbol; and

in the block interleaver, elements in a row in which the partial CB is located include first elements of the partial CB and an element in the null state, where a quantity of the elements in the null state is D-D1, D1 is a quantity of the first elements in the partial CB, and D1 is an integer greater than or equal to 3.

Optionally, in the block interleaver, a location of the element in the null state in the elements in the row in which the partial CB is located is at least one of the following locations:

the element in the null state is located before the 1st first element of the partial CB;

the element in the null state is located after the last first element of the partial CB; or

some of the elements in the null state are located between two adjacent first elements of the partial CB.

Optionally, the foregoing mapped data may be specifically obtained by the access network device by mapping each element in the sequence of each OFDM symbol on the scheduling resource to frequency domain based on a frequency order or a subcarrier sequence number order of the OFDM symbol, and when an element in the sequence is in the null state, ignoring the element and mapping a next element in the sequence.

Optionally, the L1 OFDM symbols include a first OFDM symbol and a second OFDM symbol adjacent to the first OFDM symbol, the first OFDM symbol includes a first partial CB of a CB whose quantity of elements is D, and the second OFDM symbol includes a remaining second partial CB of the CB whose quantity of elements is D; and

in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB; or

if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

Optionally, if first elements of the partial CB on one of the L1 OFDM symbols include the 1st element of a CB whose quantity of elements is D, in the block interleaver, an element in the null state in a row in which the partial CB on the OFDM symbol is located exists after the last first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists before the 1st first element of the partial CB.

Optionally, if first elements of the partial CB on one of the L1 OFDM symbols include the 1st element of a CB whose quantity of elements is D, in the block interleaver, an element in the null state in a row in which the partial CB on the OFDM symbol is located exists before

the 1st first element of the partial CB; or

if first elements of the partial CB on one of the L1 OFDM symbols include the last element of a CB whose quantity of elements is D, in the block interleaver, an element in the null state in a row in which the partial CB on the OFDM symbol is located exists after the last first element of the partial CB.

Optionally, in the block interleaver, in a row in which the partial CB on one of the L1 OFDM symbols is located, the partial CB has at least two groups of two adjacent first elements, where a quantity of elements in the null state between two adjacent first elements in one group is the same as that of the other group.

Optionally, in the block interleaver, in the row in which the partial CB on one of the L1 OFDM symbols is located, the partial CB has at least two groups of two adjacent first elements between which there are P elements in the null state, where

$$P = \text{floor}((D - D1)/(D1 - 1)),$$

where floor is an operation of rounding down to a nearest integer, Q remaining elements in the null state are located before the 1st first element of the partial CB or located after the last first element of the partial CB, and Q = (D - D1) - (D1 - 1) * P.

Optionally, the foregoing sequence is obtained by the access network device by determining, based on a quantity of CBs on each of the L1 OFDM symbols and a preset CB sorting order, a CB writing order of writing the CBs on each OFDM symbol to the block interleaver; and writing the elements of all the CBs on each of the OFDM symbols by row of the block interleaver based on the CB writing order corresponding to each OFDM symbol, and performing output by column of the block interleaver.

Optionally, the L1 OFDM symbols include a first OFDM symbol and a second OFDM symbol adjacent to the first OFDM symbol; and if a CB writing order of the first OFDM symbol is a first CB sorting order, a CB writing order of the second OFDM symbol is a reversed order of the first CB sorting order; or

if a CB writing order of the first OFDM symbol is a reversed order of the first CB sorting order, a CB writing order of the second OFDM symbol is the first CB sorting order.

The terminal device provided in this application may execute the foregoing method embodiments. An implementation principle and technical effect thereof are similar, and details are not described herein again.

FIG. 22c is a schematic structural diagram of Embodiment 3 of a terminal device according to this application. As shown in FIG. 22c, the terminal device may include a receiving module 71 and a processing module 72.

Specifically, the receiving module 71 is configured to receive mapped data sent by an access network device, where the mapped data is obtained by the access network device by writing determined to-be-sent B CBs to a block interleaver by column, performing row permutation on the block interleaver, outputting, by column, elements that are of the CBs in the block interleaver and that are obtained after the row permutation, and mapping each column of elements that are output by column, to REs of each OFDM symbol on a scheduling resource, where

each of at least B-1 CBs includes K elements, and K is an integer greater than or equal to 4; and the scheduling resource includes L OFDM symbols, each OFDM symbol has K REs, the block interleaver has K rows and L columns, and L is an integer greater than or equal to 2; and the processing module 72 is configured to perform a subsequent operation on the mapped data.

The terminal device provided in this application may execute the method in FIG. 20b. An implementation principle and technical effect thereof are similar, and details are not described herein again.

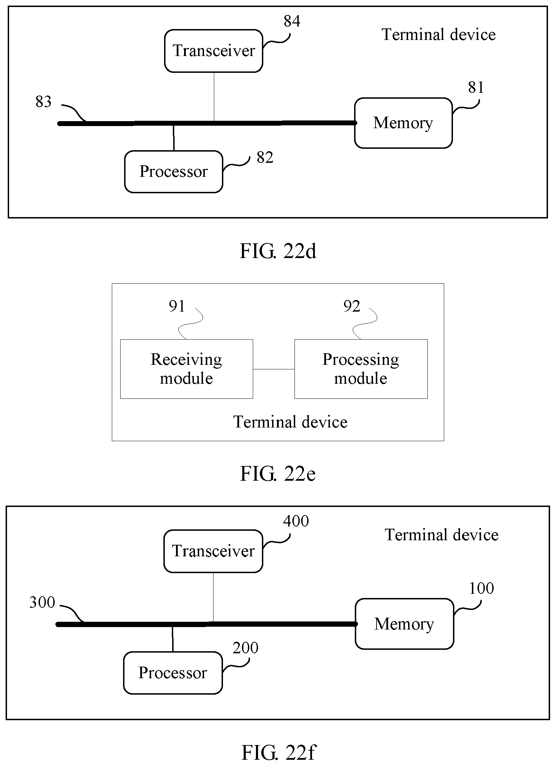

FIG. 22d is a schematic structural diagram of Embodiment 4 of a terminal device according to this application. As shown in FIG. 22d, the terminal device may include a memory 81, a processor 82, at least one communications bus 83, and a transceiver 84. The communications bus 83 is configured to implement a communication connection between components. The memory 61 may include a high-speed RAM memory, or may further include a nonvolatile memory NVM, for example, at least one magnetic disk storage. The memory 81 may store various programs, configured to complete various processing functions and implement the method steps in the embodiments. In this embodiment, the transceiver 84 may be a radio frequency processing module or a baseband processing module in the terminal device. The transceiver 84 may include a transmitter and a receiver. The transmitter and the receiver may be disposed separately, or may be integrated together. The transmitter and the receiver each may be coupled to the processor 82.

In this embodiment, the transceiver 84 is configured to receive mapped data sent by an access network device, where the mapped data is obtained by the access network device by writing determined to-be-sent B CBs to a block interleaver by column, and performing row permutation on the block interleaver; and outputting, by column, elements that are of the CBs in the block interleaver and that are obtained after the row permutation, and mapping each column of elements that are output by column, to REs of each OFDM symbol on a scheduling resource, where

each of at least B-1 CBs includes K elements, and K is an integer greater than or equal to 4; and the scheduling resource includes L OFDM symbols, each OFDM symbol has K REs, the block interleaver has K rows and L columns, and L is an integer greater than or equal to 2; and the processor 82 is configured to perform a subsequent operation on the mapped data.

Optionally, the mapped data received by the transceiver 84 is specifically obtained by the access network device by mapping each column of elements that are output by column, to frequency domain based on a frequency order or a subcarrier sequence number order of an OFDM symbol corresponding to each column of elements.

Optionally, the performing row permutation on the block interleaver includes at least the following: permuting the second row of data in the block interleaver other than the first row of data in the block interleaver to the $(K+1)^{th}$ row.

The terminal device provided in this application may execute the method in FIG. 20b. An implementation principle and technical effect thereof are similar, and details are not described herein again.

FIG. 22e is a schematic structural diagram of Embodiment 5 of a terminal device according to this application. As shown in FIG. 22e, the terminal device may include a receiving module 91 and a processing module 92.

Specifically, the receiving module 91 is configured to receive mapped data sent by an access network device, where the mapped data is obtained by the access network device by mapping determined to-be-sent B CBs to REs of a scheduling resource, where

each of at least B-1 CBs includes K elements, B is an integer greater than 1, and K is an integer greater than or equal to 4. The scheduling resource includes L OFDM symbols, and L is an integer greater than or equal to 2; and

the L OFDM symbols include a first OFDM symbol, and the first OFDM symbol includes elements of the first CB. The first OFDM symbol includes more than 2 and less than K elements of the first CB. The first OFDM symbol has at least two different pairs of elements of the first CB. Based on a frequency domain order mapped to the two pairs of elements of the first CB on the first OFDM symbol, there are Δ elements between one pair of elements of the first CB, and there are also Δ elements between the other pair of elements of the first CB, where Δ is an integer, and

the processing module 92 is configured to perform a subsequent operation on the mapped data.

The terminal device provided in this application may execute the method in FIG. 21a. An implementation principle and technical effect thereof are similar, and details are not described herein again.

FIG. 22f is a schematic structural diagram of Embodiment 6 of a terminal device according to this application. As shown in FIG. 22f, the terminal device may include a memory 100, a processor 200, at least one communications bus 300, and a transceiver 400. The communications bus 300 is configured to implement a communication connection between components. The memory 61 may include a high-speed RAM memory, or may further include a nonvolatile memory NVM, for example, at least one magnetic disk storage. The memory 100 may store various programs, configured to complete various processing functions and implement the method steps in the embodiments. In this embodiment, the transceiver 400 may be a radio frequency processing module or a baseband processing module in the terminal device. The transceiver 84 may include a transmitter and a receiver. The transmitter and the receiver may be disposed separately, or may be integrated together. The transmitter and the receiver each may be coupled to the processor 200.

In this embodiment, the transceiver 400 is configured to receive mapped data sent by an access network device, where the mapped data is obtained by the access network device by mapping determined to-be-sent B CBs to REs of a scheduling resource, where

each of at least B-1 CBs includes K elements, B is an integer greater than 1, and K is an integer greater than or equal to 4. The scheduling resource includes L OFDM symbols, and L is an integer greater than or equal to 2; and

the L OFDM symbols include a first OFDM symbol, and the first OFDM symbol includes elements of the first CB. The first OFDM symbol includes more than 2 and less than K elements of the first CB. The first OFDM symbol has at least two different pairs of elements of the first CB. Based on a frequency domain order mapped to the two pairs of elements of the first CB on the first OFDM symbol, there are Δ elements between one pair of elements of the first CB, and there are also Δ elements between the other pair of elements of the first CB, where Δ is an integer, and

the processor 200 is configured to perform a subsequent operation on the mapped data.

The terminal device provided in this application may execute the method in FIG. 21a. An implementation principle and technical effect thereof are similar, and details are not described herein again.

Method or algorithm steps described in combination with the content disclosed in this application may be implemented by hardware, or may be implemented by a processor by executing a software instruction, or may be implemented by a computer program product. The software instruction may be formed by a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information to the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

In the foregoing one or more examples, functions described in this application may be implemented by hardware, software, firmware, or any combination thereof. When implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the several embodiments provided in this application, it should be understood that the disclosed system, device, and method may be implemented in other manners, without falling beyond the scope of this application. For example, the described embodiment is merely an example. For example, the module or unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one location, or may be distributed on a plurality of network units. Some or all the modules may be selected according to actual needs to achieve the objectives of the solutions of the embodiments.

**Claims**

1. A data transmission method, comprising:

   determining, by an access network device, to-be-sent B code blocks CBs, wherein each of at least B-1 CBs comprises D elements, B is an integer greater than 1, and D is an integer greater than or equal to 4;
   mapping, by the access network device, the B CBs to resource elements REs of a scheduling resource, to obtain mapped data, wherein the scheduling resource comprises L OFDM symbols, and L is an integer greater than or equal to 2; wherein
   L1 of the L OFDM symbols meet one of a first condition, a second condition, or a third condition, wherein the first condition is that one OFDM symbol comprises elements of one partial CB and elements of at least one complete CB; the second condition is that one OFDM symbol comprises elements of at least one complete CB and elements of two other partial CBs; the third condition is that one OFDM symbol comprises elements of two partial CBs; at least one of the L1 OFDM symbols has at least two groups of adjacent first elements, wherein a quantity of elements of another CB between adjacent first elements in one group is the same as that of the other group, and the first elements are elements in one partial CB; and the partial CB is a part of a CB whose quantity of elements is D; and sending, by the access network device, the mapped data to a terminal device.

2. The method according to claim 1, wherein each of L-L1 OFDM symbols comprises elements of at least one complete CB and comprises no element of a partial CB.

3. The method according to claim 1, wherein all elements of the CB whose quantity of elements is D and to which the partial CB belongs are distributed on different subcarriers of two OFDM symbols.

4. The method according to any one of claims 1 to 3, wherein each of the B CBs is a data block corresponding to each data layer.

5. The method according to claim 1, wherein if the L1 OFDM symbols meet the first condition or the second condition, the mapping, by the access network device, the B CBs to resource elements REs of a scheduling resource, to obtain mapped data specifically comprises:

   determining, by the access network device, a sequence of each OFDM symbol on the scheduling resource, wherein a sequence of each of the L1 OFDM symbols comprises second elements, first elements, and an element in a null state on the OFDM symbol, and the second elements are elements in one complete CB on the OFDM symbol; and
   mapping, by the access network device, the sequence of each OFDM symbol on the scheduling resource to the REs of the scheduling resource, to obtain mapped data.

6. The method according to claim 1, wherein if the L1 OFDM symbols meet the third condition, the mapping, by the access network device, the B CBs to resource elements REs of a scheduling resource, to obtain mapped data specifically comprises:

   determining, by the access network device, a sequence of each OFDM symbol on the scheduling resource, wherein a sequence of each of the L1 OFDM symbols comprises first elements corresponding to the two partial CBs and an element in a null state on the OFDM symbol; and
   mapping, by the access network device, the sequence corresponding to each OFDM symbol on the scheduling resource to the REs of the scheduling resource, to obtain mapped data.

7. The method according to claim 5 or 6, wherein the determining, by the access network device, a sequence of each OFDM symbol on the scheduling resource specifically comprises:

writing, by the access network device for each of the L1 OFDM symbols, elements of all CBs on the OFDM symbol by row of a block interleaver, and performing output by column of the block interleaver, to obtain the sequence of each of the L1 OFDM symbols, wherein the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs comprised on the OFDM symbol; and in the block interleaver, elements in a row in which the partial CB is located comprise first elements of the partial CB and an element in the null state, wherein a quantity of the elements in the null state is D-D1, D1 is a quantity of the first elements in the partial CB, and D1 is an integer greater than or equal to 3.

8. The method according to claim 7, wherein in the block interleaver, a location of the element in the null state in the elements in the row in which the partial CB is located is at least one of the following locations:

the element in the null state is located before the 1st first element of the partial CB; the element in the null state is located after the last first element of the partial CB; or some of the elements in the null state are located between two adjacent first elements of the partial CB.

9. The method according to claim 5 or 6, wherein the mapping, by the access network device, the sequence of each OFDM symbol on the scheduling resource to the REs of the scheduling resource, to obtain mapped data specifically comprises: mapping, by the access network device, each element in the sequence of each OFDM symbol on the scheduling resource to frequency domain based on a frequency order or a subcarrier sequence number order of the OFDM symbol, and when an element in the sequence is in the null state, ignoring the element and mapping a next element in the sequence, to obtain mapped data.

10. The method according to claim 8, wherein the L1 OFDM symbols comprise a first OFDM symbol and a second OFDM symbol adjacent to the first OFDM symbol, the first OFDM symbol comprises a first partial CB of a CB whose quantity of elements is D, and the second OFDM symbol comprises a remaining second partial CB of the CB whose quantity of elements is D; and in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB; or if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

11. The method according to claim 8, wherein if first elements of the partial CB on one of the L1 OFDM symbols comprise the 1st element of a CB whose quantity of elements is D, in the block interleaver, an element in the null state in a row in which the partial CB on the OFDM symbol is located exists after the last first element of the partial CB; or if first elements of the partial CB on one of the L1 OFDM symbols comprise the last element of a CB whose quantity of elements is D, in the block interleaver, an element in the null state in a row in which the partial CB on the OFDM symbol is located exists before the 1st first element of the partial CB.

12. The method according to claim 8, wherein if first elements of the partial CB on one of the L1 OFDM symbols comprise the 1st element of a CB whose quantity of elements is D, in the block interleaver, an element in the null state in a row in which the partial CB on the OFDM symbol is located exists before the 1st first element of the partial CB; or if first elements of the partial CB on one of the L1 OFDM symbols comprise the last element of a CB whose quantity of elements is D, in the block interleaver, an element in the null state in a row in which the partial CB on the OFDM symbol is located exists after the last first element of the partial CB.

13. The method according to claim 8, wherein in the block interleaver, in a row in which the partial CB on one of the L1 OFDM symbols is located, the partial CB has at least two groups of two adjacent first elements, wherein a quantity of elements in the null state between two adjacent first elements in one group is the same as that of the other group.

14. The method according to claim 13, wherein in the block interleaver, in the row in which the partial CB on one of the L1 OFDM symbols is located, the partial CB has at least two groups of two adjacent first elements between which there are P elements in the null state, wherein

$$P = floor((D - D1)/(D1 - 1)),$$

wherein floor is an operation of rounding down to a nearest integer, Q remaining elements in the null state are located before the $1^{st}$ first element of the partial CB or located after the last first element of the partial CB, and Q = (D - D1) - (D1 - 1) * P.

15. The method according to claim 7, wherein the writing, for each of the L1 OFDM symbols, elements of all CBs on the OFDM symbol by row of a block interleaver, and performing output by column of the block interleaver, to obtain the sequence corresponding to each of the L1 OFDM symbols specifically comprises:

    determining, by the access network device based on a quantity of CBs on each of the L1 OFDM symbols and a preset CB sorting order, a CB writing order of writing the CBs on each OFDM symbol to the block interleaver; and writing the elements of all the CBs on each of the OFDM symbols by row of the block interleaver based on the CB writing order corresponding to each OFDM symbol, and performing output by column of the block interleaver, to obtain the sequence corresponding to each of the L1 OFDM symbols.

16. The method according to claim 15, wherein the L1 OFDM symbols comprise a first OFDM symbol and a second OFDM symbol adjacent to the first OFDM symbol, and the determining, by the access network device based on a quantity of CBs on each of the L1 OFDM symbols and a preset CB sorting order, a CB writing order of writing the CBs on each OFDM symbol to the block interleaver specifically comprises:

    if a CB writing order of the first OFDM symbol is a first CB sorting order, a CB writing order of the second OFDM symbol is a reversed order of the first CB sorting order; or if a CB writing order of the first OFDM symbol is a reversed order of the first CB sorting order, a CB writing order of the second OFDM symbol is the first CB sorting order.

17. A data transmission method, comprising:

    determining, by an access network device, to-be-sent B code blocks CBs, wherein each of at least B-1 CBs comprises K elements, and K is an integer greater than or equal to 4; writing, by the access network device, elements of the B CBs to a block interleaver by column, and performing row permutation on the block interleaver; outputting, by the access network device by column, elements that are of the CBs in the block interleaver and that are obtained after the row permutation, and mapping each column of elements that are output by column, to resource elements REs of each OFDM symbol on a scheduling resource, to obtain mapped data; and sending, by the access network device, the mapped data to a terminal device, wherein the scheduling resource comprises L OFDM symbols, each OFDM symbol has K REs, the block interleaver has K rows and L columns, and L is an integer greater than or equal to 2.

18. The method according to claim 17, wherein the mapping each column of elements that are output by column, to resource elements REs of each OFDM symbol on a scheduling resource, to obtain mapped data specifically comprises:
    mapping, by the access network device, each column of elements that are output by column, to frequency domain based on a frequency order or a subcarrier sequence number order of an OFDM symbol corresponding to each column of elements, to obtain mapped data.

19. The method according to claim 17, wherein the performing row permutation on the block interleaver comprises at least the following:
    permuting the second row of data in the block interleaver other than the first row of data in the block interleaver to the $(K+1)^{th}$ row.

20. An access network device, comprising a processor and a transceiver, wherein the processor is configured to determine to-be-sent B code blocks CBs, and map the B CBs to resource elements REs of a scheduling resource, to obtain mapped data, wherein each of at least B-1 CBs comprises D elements, B is an integer greater than 1, and D is an integer greater than or equal to 4; and the scheduling resource comprises L OFDM symbols, and L is an integer greater than or equal to 2; and
    the transceiver is configured to send the mapped data to a terminal device, wherein
    L1 of the L OFDM symbols meet one of a first condition, a second condition, or a third condition, wherein the first condition is that one OFDM symbol comprises elements of one partial CB and elements of at least one complete CB; the second condition is that one OFDM symbol comprises elements of at least one complete CB and elements of two other partial CBs; the third condition is that one OFDM symbol comprises elements of two partial CBs; at least one of the L1 OFDM symbols has at least two groups of adjacent first elements, wherein a quantity of elements of another CB between adjacent first elements in one group is the same as that of the other group, and the first elements are elements in one partial CB; and the partial CB is a part of a CB whose quantity of elements is D.

21. The access network device according to claim 20, wherein each of L-L1 OFDM symbols comprises elements of at least one complete CB and comprises no element of a partial CB.

22. The access network device according to claim 20, wherein all elements of the CB whose quantity of elements is D and to which the partial CB belongs are distributed on different subcarriers of two OFDM symbols.

23. The access network device according to any one of claims 20 to 22, wherein each of the B CBs is a data block corresponding to each data layer.

24. The access network device according to claim 20, wherein if the L1 OFDM symbols meet the first condition or the second condition,
the processor is specifically configured to determine a sequence of each OFDM symbol on the scheduling resource; and map the sequence of each OFDM symbol on the scheduling resource to the REs of the scheduling resource, to obtain mapped data; wherein
a sequence of each of the L1 OFDM symbols comprises second elements, first elements, and an element in a null state on the OFDM symbol, and the second elements are elements in one complete CB on the OFDM symbol.

25. The access network device according to claim 20, wherein if the L1 OFDM symbols meet the third condition,
the processor is specifically configured to determine a sequence of each OFDM symbol on the scheduling resource; and map the sequence corresponding to each OFDM symbol on the scheduling resource to the REs of the scheduling resource, to obtain mapped data; wherein
a sequence of each of the L1 OFDM symbols comprises first elements corresponding to the two partial CBs and an element in a null state on the OFDM symbol.

26. The access network device according to claim 24 or 25, wherein the processor is specifically configured to write, by the access network device for each of the L1 OFDM symbols, elements of all CBs on the OFDM symbol by row of a block interleaver, and perform output by column of the block interleaver, to obtain the sequence of each of the L1 OFDM symbols, wherein
the block interleaver has M rows and D columns, M is a quantity of CBs on one of the L1 OFDM symbols, one CB on the OFDM symbol is correspondingly written to one row of the block interleaver, and the quantity of CBs on the OFDM symbol is equal to a total quantity of all CBs comprised on the OFDM symbol; and
in the block interleaver, elements in a row in which the partial CB is located comprise first elements of the partial CB and an element in the null state, wherein a quantity of the elements in the null state is D-D1, D1 is a quantity of the first elements in the partial CB, and D1 is an integer greater than or equal to 3.

27. The access network device according to claim 26, wherein in the block interleaver, a location of the element in the null state in the elements in the row in which the partial CB is located is at least one of the following locations:

> the element in the null state is located before the 1st first element of the partial CB;
> the element in the null state is located after the last first element of the partial CB; or
> some of the elements in the null state are located between two adjacent first elements of the partial CB.

28. The access network device according to claim 24 or 25, wherein the processor is specifically configured to map each element in the sequence of each OFDM symbol on the scheduling resource to frequency domain based on a frequency order or a subcarrier sequence number order of the OFDM symbol, and when an element in the sequence is in the null state, ignore the element and map a next element in the sequence, to obtain mapped data.

29. The access network device according to claim 27, wherein the L1 OFDM symbols comprise a first OFDM symbol and a second OFDM symbol adjacent to the first OFDM symbol, the first OFDM symbol comprises a first partial CB of a CB whose quantity of elements is D, and the second OFDM symbol comprises a remaining second partial CB of the CB whose quantity of elements is D; and
in the block interleaver, if an element in the null state in a row in which the first partial CB on the first OFDM symbol is located exists after the last first element of the first partial CB, an element in the null state in a row in which the second partial CB on the second OFDM symbol is located exists before the 1st first element of the second partial CB; or

if an element in the null state in a row in which the first partial CB on the first OFDM symbol is located exists before the 1st first element of the first partial CB, an element in the null state in a row in which the second partial CB on the second OFDM symbol is located exists after the last first element of the second partial CB.

30. The access network device according to claim 27, wherein if first elements of the partial CB on one of the L1 OFDM symbols comprise the 1st element of a CB whose quantity of elements is D, in the block interleaver, an element in the null state in a row in which the partial CB on the OFDM symbol is located exists after the last first element of the partial CB; or if first elements of the partial CB on one of the L1 OFDM symbols comprise the last element of a CB whose quantity of elements is D, in the block interleaver, an element in the null state in a row in which the partial CB on the OFDM symbol is located exists before the 1st first element of the partial CB.

31. The access network device according to claim 27, wherein if first elements of the partial CB on one of the L1 OFDM symbols comprise the 1st element of a CB whose quantity of elements is D, in the block interleaver, an element in the null state in a row in which the partial CB on the OFDM symbol is located exists before the 1st first element of the partial CB; or if first elements of the partial CB on one of the L1 OFDM symbols comprise the last element of a CB whose quantity of elements is D, in the block interleaver, an element in the null state in a row in which the partial CB on the OFDM symbol is located exists after the last first element of the partial CB.

32. The access network device according to claim 27, wherein in the block interleaver, in a row in which the partial CB on one of the L1 OFDM symbols is located, the partial CB has at least two groups of two adjacent first elements, wherein a quantity of elements in the null state between two adjacent first elements in one group is the same as that of the other group.

33. The access network device according to claim 32, wherein in the block interleaver, in the row in which the partial CB on one of the L1 OFDM symbols is located, the partial CB has at least two groups of two adjacent first elements between which there are P elements in the null state, wherein

$$P = \mathrm{floor}((D - D1)/(D1 - 1)),$$

wherein floor is an operation of rounding down to a nearest integer, Q remaining elements in the null state are located before the 1st first element of the partial CB or located after the last first element of the partial CB, and Q = (D - D1) - (D1 - 1) * P.

34. The access network device according to claim 26, wherein the processor is specifically configured to determine, based on a quantity of CBs on each of the L1 OFDM symbols and a preset CB sorting order, a CB writing order of writing the CBs on each OFDM symbol to the block interleaver; and write the elements of all the CBs on each of the OFDM symbols by row of the block interleaver based on the CB writing order corresponding to each OFDM symbol, and perform output by column of the block interleaver, to obtain the sequence corresponding to each of the L1 OFDM symbols.

35. The access network device according to claim 34, wherein the L1 OFDM symbols comprise a first OFDM symbol and a second OFDM symbol adjacent to the first OFDM symbol; and
if a CB writing order of the first OFDM symbol is a first CB sorting order, a CB writing order of the second OFDM symbol is a reversed order of the first CB sorting order; or
if a CB writing order of the first OFDM symbol is a reversed order of the first CB sorting order, a CB writing order of the second OFDM symbol is the first CB sorting order.

36. An access network device, comprising a processor and a transceiver, wherein the processor is configured to determine to-be-sent B code blocks CBs; write elements of the B CBs to a block interleaver by column, and perform row permutation on the block interleaver; and output, by column, elements that are of the CBs in the block interleaver and that are obtained after the row permutation, and map each column of elements that are output by column, to resource elements REs of each OFDM symbol on a scheduling resource, to obtain mapped data; wherein each of at least B-1 CBs comprises K elements, and K is an integer greater than or equal to 4; and the transceiver is configured to send the mapped data to a terminal device, wherein
the scheduling resource comprises L OFDM symbols, each OFDM symbol has K REs, the block interleaver has K rows and L columns, and L is an integer greater than or equal to 2.

37. The access network device according to claim 36, wherein the processor is specifically configured to map each column of elements that are output by column, to frequency domain based on a frequency order or a subcarrier sequence number order of an OFDM symbol corresponding to each column of elements, to obtain mapped data.

**38.** The access network device according to claim 36, wherein the processor is specifically configured to permute the second row of data in the block interleaver other than the first row of data in the block interleaver to the (K+1)$^{th}$ row.

Frequency
domain

| | |
|---|---|
| a1 | b6 |
| a2 | b7 |
| a3 | b8 |
| a4 | b9 |
| a5 | b10 |
| a6 | c1 |
| a7 | c2 |
| a8 | c3 |
| a9 | c4 |
| a10 | c5 |
| b1 | c6 |
| b2 | c7 |
| b3 | c8 |
| b4 | c9 |
| b5 | c10 |

CB0={a1,a2,a3,a4,a5,a6,a7,a8,a9,a10}

CB1={b1,b2,b3,b4,b5,b6,b7,b8,b9,b10}

CB2={c1,c2,c3,c4,c5,c6,c7,c8,c9,c10}

OFDM symbol 1    OFDM symbol 2

Time
domain

FIG. 1

01

02

FIG. 2

An access network device determines to-be-sent B code blocks CBs, where each of at least B–1 CBs includes D elements, B is an integer greater than 1, and D is an integer greater than or equal to 4 — S101

The access network device maps the B CBs to REs of a scheduling resource, to obtain mapped data, where the scheduling resource includes L OFDM symbols, and L is an integer greater than or equal to 2 — S102

The access network device sends the mapped data to a terminal device — S103

FIG. 3

Frequency domain

| Symbol A | Symbol B |
|----------|----------|
| a1 | c1 |
| b1 | c2 |
| a2 | c3 |
| b2 | c4 |
| a3 | c5 |
| b3 | c6 |
| a4 | b6 |
| b4 | c7 |
| a5 | b7 |
| b5 | c8 |
| a6 | b8 |
| a7 | c9 |
| a8 | b9 |
| a9 | c10 |
| a10 | b10 |

Time domain

CB0={a1,a2,a3,a4,a5,a6,a7,a8,a9,a10}

CB1'={b1,b2,b3,b4,b5}

CB1"={b6,b7,b8,b9,b10}

CB2={c1,c2,c3,c4,c5,c6,c7,c8,c9,c10}

FIG. 4

Frequency domain ▲

| Symbol A | Symbol B |
|---|---|
| a1 | d1 |
| b1 | e1 |
| c1 | d2 |
| a2 | e2 |
| b2 | c3 |
| c2 | d3 |
| a3 | e3 |
| b3 | c4 |
| a4 | d4 |
| b4 | e4 |
| a5 | c5 |
| b5 | d5 |
| a6 | c6 |
| b6 | d6 |
| a7 | c7 |
| b7 | d7 |
| a8 | c8 |
| 68 | d8 |
| a9 | c9 |
| b9 | d9 |
| a10 | c10 |
| b10 | d10 |

Symbol A   Symbol B

Time domain →

CB0={a1,a2,a3,a4,a5,a6,a7,a8,a9,a10}

CB1={b1,b2,b3,b4,b5,b6,b7,b8,b9,b10}

CB2'={c1,c2}

CB2"={c3,c4,c5,c6,c7,c8,c9,c10}

CB3={d1,d2,d3,d4,d5,d6,d7,d8,d9,d10}

CB4'={e1,e2,e3,e4}

FIG. 5

CB0={a1,a2,a3,a4,a5,a6,a7,a8,a9,a10}

CB1'={b1,b2}

CB1''={b3,b4,b5,b6,b7,b8,b9,b10}

CB2'={c1,c2,c3,c4}

Frequency domain

| Symbol A | Symbol B |
|----------|----------|
| a1 | c1 |
| b1 | c2 |
| a2 | b3 |
| b2 | c3 |
| a3 | b4 |
| a4 | c4 |
| a5 | b5 |
| a6 | b6 |
| a7 | b7 |
| a8 | b8 |
| a9 | b9 |
| a10 | b10 |

Time domain

**FIG. 6**

An access network device determines a sequence of each OFDM symbol on a scheduling resource, where a sequence of each of L1 OFDM symbols includes second elements, first elements, and an element in a null state on the OFDM symbol, and the second elements are elements in one complete CB on the OFDM symbol — S201

The access network device maps the sequence of each OFDM symbol on the scheduling resource to REs of the scheduling resource, to obtain mapped data — S202

**FIG. 7**

An access network device determines, based on a quantity of CBs on each of L1 OFDM symbols and a preset CB sorting order, a CB writing order of writing the CBs on each OFDM symbol to a block interleaver ⟩ S301

The access network device writes, for each of the L1 OFDM symbols, elements of all the CBs on the OFDM symbol by row of the block interleaver based on the CB writing order corresponding to each OFDM symbol, and performs output by column of the block interleaver, to obtain a sequence corresponding to each of the L1 OFDM symbols ⟩ S302

FIG. 8

| | | | | | | | | | | |
|---|---|---|---|---|---|---|---|---|---|---|
| CB0 | a1 | a2 | a3 | a4 | a5 | a6 | a7 | a8 | a9 | a10 |
| CB1 | b1 | b2 | b3 | b4 | b5 | b6 | b7 | b8 | b9 | b10 |
| CB2' | c1 | c2 | c3 | c4 | c5 | NA | NA | NA | NA | NA |

First OFDM symbol

| | | | | | | | | | | |
|---|---|---|---|---|---|---|---|---|---|---|
| CB2" | NA | NA | NA | NA | NA | c6 | c7 | c8 | c9 | c10 |
| CB3 | d1 | d2 | d3 | d4 | d5 | d6 | d7 | d8 | d9 | d10 |
| CB4 | e1 | e2 | e3 | e4 | e5 | e6 | e7 | e8 | e9 | e10 |

Second OFDM symbol

FIG. 9

| | | | | | | | | | | | |
|---|---|---|---|---|---|---|---|---|---|---|---|
| CB0 | a1 | a2 | a3 | a4 | a5 | a6 | a7 | a8 | a9 | a10 | |
| CB1 | b1 | b2 | b3 | b4 | b5 | b6 | b7 | b8 | b9 | b10 | First OFDM symbol |
| CB2' | NA | NA | NA | NA | NA | c1 | c2 | c3 | c4 | c5 | |
| CB2" | c6 | c7 | c8 | c9 | c10 | NA | NA | NA | NA | NA | |
| CB3 | d1 | d2 | d3 | d4 | d5 | d6 | d7 | d8 | d9 | d10 | Second OFDM symbol |
| CB4 | e1 | e2 | e3 | e4 | e5 | e6 | e7 | e8 | e9 | e10 | |

FIG. 10

| | | | | | | | | | | | |
|---|---|---|---|---|---|---|---|---|---|---|---|
| CB0 | a1 | a2 | a3 | a4 | a5 | a6 | a7 | a8 | a9 | a10 | |
| CB1 | b1 | b2 | b3 | b4 | b5 | b6 | b7 | b8 | b9 | b10 | First OFDM symbol |
| CB2' | c1 | c2 | NA | NA | NA | NA | NA | NA | NA | NA | |
| CB2" | NA | NA | c3 | c4 | c5 | c6 | c7 | c8 | c9 | c10 | |
| CB3 | d1 | d2 | d3 | d4 | d5 | d6 | d7 | d8 | d9 | d10 | Second OFDM symbol |
| CB4 | e1 | e2 | e3 | e4 | NA | NA | NA | NA | NA | NA | |

FIG. 11

| CB0 | a1 | a2 | a3 | a4 | a5 | a6 | a7 | a8 | a9 | a10 |
|---|---|---|---|---|---|---|---|---|---|---|
| CB1' | b1 | b2 | NA | NA | NA | NA | NA | NA | NA | NA |

First OFDM symbol

| CB1" | NA | NA | b3 | b4 | b5 | b6 | b7 | b8 | b9 | b10 |
|---|---|---|---|---|---|---|---|---|---|---|
| CB2' | c1 | c2 | c3 | c4 | NA | NA | NA | NA | NA | NA |

Second OFDM symbol

FIG. 12

| CB0 | a1 | a2 | a3 | a4 | a5 | a6 | a7 | a8 | a9 | a10 | a11 |
|---|---|---|---|---|---|---|---|---|---|---|---|
| CB1 | b1 | b2 | b3 | b4 | b5 | b6 | b7 | b8 | b9 | b10 | b11 |
| CB2' | NA | NA | c1 | NA | c2 | NA | c3 | NA | c4 | NA | c5 |

First OFDM symbol

| CB2" | c6 | NA | c7 | NA | c8 | NA | c9 | NA | c10 | NA | c11 |
|---|---|---|---|---|---|---|---|---|---|---|---|
| CB3 | d1 | d2 | d3 | d4 | d5 | d6 | d7 | d8 | d9 | d10 | d10 |
| CB4 | e1 | e2 | e3 | e4 | e5 | e6 | e7 | e8 | e9 | e10 | e11 |

Second OFDM symbol

FIG. 13

An access network device determines to-be-sent B code blocks CBs, where each of at least B−1 CBs includes K elements, and K is an integer greater than or equal to 4 — S401

The access network device writes elements of the B CBs to a block interleaver by column, and performs row permutation on the block interleaver — S402

The access network device outputs, by column, elements that are of the CBs in the block interleaver and that are obtained after the row permutation, and maps each column of elements that are output by column, to resource elements REs of each OFDM symbol on a scheduling resource, to obtain mapped data — S403

The access network device sends the mapped data to a terminal device — S404

FIG. 14

An access network device determines to-be-sent B code blocks CBs, where each of at least B−1 CBs includes K elements, B is an integer greater than 1, and K is an integer greater than or equal to 4 — S501

The access network device maps the B CBs to REs of a scheduling resource, to obtain mapped data, where the scheduling resource includes L OFDM symbols, and L is an integer greater than or equal to 2 — S502

The access network device sends the mapped data to a terminal device — S503

FIG. 15

11

12

13

Determining module | Mapping module | Sending module

Access network device

FIG. 16

12

11

13

Mapping module

Determining module

Determining unit | 121

Sending module

Mapping unit

122

Access network device

FIG. 17

41

42

43

44

45

Determining module | Interleaving module | Output module | Mapping module | Sending module

Access network device

FIG. 18

24
Transceiver

Access network device

23

21
Memory

22
Processor

**FIG. 19**

34
Transceiver

Access network device

33

31
Memory

32
Processor

**FIG. 20**

A terminal device receives mapped data sent by an access network device, where the mapped data is obtained by the access network device by mapping determined to-be-sent B CBs to REs of a scheduling resource

S701

The terminal device performs a subsequent operation on the mapped data

S702

**FIG. 20a**

A terminal device receives mapped data sent by an access network device, where the mapped data is obtained by the access network device by writing determined to-be-sent B CBs to a block interleaver by column, and performing row permutation on the block interleaver; and outputting, by column, elements that are of the CBs in the block interleaver and that are obtained after the row permutation, and mapping each column of elements that are output by column, to REs of each OFDM symbol on a scheduling resource

S801

The terminal device performs a subsequent operation on the mapped data

S802

FIG. 20b

An access network device determines to-be-sent B code blocks CBs, where each of at least B−1 CBs includes K elements, B is an integer greater than 1, and K is an integer greater than or equal to 4

S601

The access network device maps the B CBs to resource elements REs of a scheduling resource, to obtain mapped data, where the scheduling resource includes L OFDM symbols, and L is an integer greater than or equal to 2

S602

The access network device sends the mapped data to a terminal device

S603

FIG. 21

A terminal device receives mapped data sent by an access network device, where the mapped data is obtained by the access network device by mapping determined to-be-sent B CBs to REs of a scheduling resource

S901

The terminal device performs a subsequent operation on the mapped data

S902

FIG. 21a

51

52

| Receiving module | Processing module |

Terminal device

FIG. 22a

64

Transceiver

Terminal device

61

63

Memory

Processor

62

FIG. 22b

71

72

| Receiving module | Processing module |

Terminal device

FIG. 22c

Terminal device

84
Transceiver

81
Memory

83

82
Processor

**FIG. 22d**

91
Receiving module

92
Processing module

Terminal device

**FIG. 22e**

Terminal device

400
Transceiver

100
Memory

300

200
Processor

**FIG. 22f**

## INTERNATIONAL SEARCH REPORT

| International application No. |
|---|
| PCT/CN2018/085526 |

**A. CLASSIFICATION OF SUBJECT MATTER**

H04L 5/00 (2006.01) i

According to International Patent Classification (IPC) or to both national classification and IPC

**B. FIELDS SEARCHED**

Minimum documentation searched (classification system followed by classification symbols)

H04L, G06F, H04W

Documentation searched other than minimum documentation to the extent that such documents are included in the fields searched

Electronic data base consulted during the international search (name of data base and, where practicable, search terms used)

CNABS, CNTXT, CNKI, VEN: 数据，传输，码块，映射，正交频分复用, data, transmit, code block, resource, OFDM, orthogonal frequency division multiplexing

**C. DOCUMENTS CONSIDERED TO BE RELEVANT**

| Category* | Citation of document, with indication, where appropriate, of the relevant passages | Relevant to claim No. |
|---|---|---|
| A | CN 105812107 A (ZTE CORP.), 27 July 2016 (27.07.2016), entire document | 1-38 |
| A | CN 104871506 A (COMMONWEALTH SCIENTIFIC AND INDUSTRIAL RESEARCH ORGANISATION), 26 August 2015 (26.08.2015), entire document | 1-38 |
| A | CN 101636938 A (SAMSUNG ELECTRONICS CO., LTD.), 27 January 2010 (27.01.2010), entire document | 1-38 |
| A | CN 1909538 A (HUAWEI TECHNOLOGIES CO., LTD.), 07 February 2007 (07.02.2007), entire document | 1-38 |
| A | US 6289000 B1 (INTELLON CORP.), 11 September 2001 (11.09.2001), entire document | 1-38 |

☐ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 May 2018 | 26 July 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>SUN, Yufang<br><br>Telephone No. 86-(010)-62089463 |

Form PCT/ISA/210 (second sheet) (January 2015)

## INTERNATIONAL SEARCH REPORT
### Information on patent family members

International application No.

PCT/CN2018/085526

| Patent Documents referred in the Report | Publication Date | Patent Family | Publication Date |
|---|---|---|---|
| CN 105812107 A | 27 July 2016 | EP 3226458 A1 | 04 October 2017 |
| | | EP 3226458 A4 | 20 December 2017 |
| | | US 2017366299 A1 | 21 December 2017 |
| | | WO 2016107160 A1 | 07 July 2016 |
| CN 104871506 A | 26 August 2015 | US 9485127 B2 | 01 November 2016 |
| | | EP 2909986 A1 | 26 August 2015 |
| | | US 2015256373 A1 | 10 September 2015 |
| | | AU 2012392501 B2 | 22 December 2016 |
| | | WO 2014059460 A1 | 24 April 2014 |
| | | EP 2909986 A4 | 01 June 2016 |
| | | AU 2012392501 A1 | 07 May 2015 |
| CN 101636938 A | 27 January 2010 | US 2013145239 A1 | 06 June 2013 |
| | | RU 2428796 C2 | 10 September 2011 |
| | | CN 103269261 A | 28 August 2013 |
| | | US 9525513 B2 | 20 December 2016 |
| | | CN 101636938 B | 19 June 2013 |
| | | TW 200904089 A | 16 January 2009 |
| | | DE 202008018239 U1 | 04 April 2012 |
| | | DE 202008018242 U1 | 02 April 2012 |
| | | JP 5730972 B2 | 10 June 2015 |
| | | DE 202008018337 U1 | 04 February 2013 |
| | | RU 2009134548 A | 20 March 2011 |
| | | AU 2008227371 B2 | 02 June 2011 |
| | | US 9590765 B2 | 07 March 2017 |
| | | TW I484795 B | 11 May 2015 |
| | | KR 20090125080 A | 03 December 2009 |
| | | WO 2008114957 A1 | 25 September 2008 |
| | | EP 1971096 A3 | 12 March 2014 |
| | | JP 5144686 B2 | 13 February 2013 |
| | | EP 1971096 A2 | 17 September 2008 |
| | | KR 101463890 B1 | 20 November 2014 |
| | | CA 2680375 C | 04 October 2016 |
| | | JP 2010521916 A | 24 June 2010 |
| | | AU 2008227371 A1 | 25 September 2008 |
| | | JP 5596714 B2 | 24 September 2014 |
| | | DE 202008018331 U1 | 15 April 2013 |
| | | CA 2680375 A1 | 25 September 2008 |
| | | US 2008225965 A1 | 18 September 2008 |
| | | JP 2015144480 A | 06 August 2015 |
| | | JP 6320338 B2 | 09 May 2018 |
| | | JP 2014014165 A | 23 January 2014 |
| | | JP 2012120217 A | 21 June 2012 |
| | | US 2016028505 A1 | 28 January 2016 |
| | | US 8379738 B2 | 19 February 2013 |
| | | IN 288004 B | 06 October 2017 |
| CN 1909538 A | 07 February 2007 | None | |
| US 6289000 B1 | 11 September 2001 | CA 2408405 A1 | 22 November 2001 |
| | | EP 1282951 A4 | 15 April 2009 |
| | | AU 6539701 A | 26 November 2001 |

Form PCT/ISA/210 (patent family annex) (January 2015)

## INTERNATIONAL SEARCH REPORT
Information on patent family members

International application No.

PCT/CN2018/085526

| Patent Documents referred in the Report | Publication Date | Patent Family | Publication Date |
|---|---|---|---|
| | | EP 2357749 A2 | 17 August 2011 |
| | | WO 0189124 A1 | 22 November 2001 |
| | | EP 2357749 A3 | 14 September 2011 |
| | | CA 2408405 C | 30 March 2010 |
| | | JP 5079201 B2 | 21 November 2012 |
| | | JP 2003533939 A | 11 November 2003 |
| | | EP 1282951 A1 | 12 February 2003 |

Form PCT/ISA/210 (patent family annex) (January 2015)

**EP 3 614 604 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710313986